# EUROPEAN PATENT SPECIFICATION

(11) **EP 1 782 108 B1**
(45) Date of publication and mention of the grant of the patent: **16.02.2011**
(21) Application number: 05771928.8
(22) Date of filing: 08.08.2005
(51) Int. Cl.: G02B 5/18, B42D 15/10

(54) **A METHOD OF CREATING A THREE-DIMENSIONAL IMAGE, A DIFFRACTIVE ELEMENT AND METHOD OF CREATING THE SAME**
VERFAHREN ZUR ERZEUGUNG EINES DREIDIMENSIONALEN BILDES, BEUGUNGSELEMENT UND VERFAHREN ZU SEINER ERZEUGUNG
PROCEDE DESTINE A CREER UNE IMAGE TRIDIMENSIONNELLE, ELEMENT A DIFFRACTION ET PROCEDE DE CREATION CORRESPONDANT

(30) Priority: 06.08.2004 CZ 20040869
(43) Date of publication of application: 09.05.2007
(73) Proprietor: Optaglio sro, 250 68 Husinec-Rez 199 (CZ)
(72) Inventor: Ryzi, Zbynek, 250 68 Husinec-Rez 199 (CZ); Kolarik, Vladimir, 250 68 Husinec-Rez 199 (CZ); Kotacka, Libor, 250 68 Husinec-Rez 199 (CZ); Zolotukhin, Max, Andover Hampshire SP10 4DU (GB)
(74) Representative: Gill, David Alan
(86) International application number: PCT/EP2005/053903
(87) International publication number: WO 2006/013215

(56) References cited:
- WO-A-01/84193
- WO-A-90/08338
- WO-A-95/02200
- US-A- 4 455 061
- US-A- 4 547 037
- US-A- 5 909 313

## Description

### Field of the invention

The present invention relates to a method of creating a three-dimensional image, diffractive element and a method of creating the same, and particularly to a security diffractive element designed for example to protect notes, coins, credit cards or identification cards, documents or other valuable items, products etc.

### The prior art

Security elements based upon diffractive structures have commonly been used for several decades. Their mass usage started from discovery of large-capacity multiplication of relief structures into plastic foils by means of technology of pressing. These elements are often classed as belonging into group of so-called diffractive optically variable elements (DOVD) or diffractive optical elements with variable image (DOVID) and they have constantly been developing starting from nowadays already classic rainbow holograms with three-dimensional or a plain sensation, over the whole range of image diffractive structures created on principle of combinations of diffraction gratings with various parameters up to diffractive elements with more complex periodical, quasiperiodical or aperiodic structures. Visual sensation of all these elements is very heterogenous - three-dimensional, plain, achromatic, reversable - in the sense of colours or various images positioned on the same surface, motion - changeability of graphical motives, etc.

Three - dimensional effects based on diffractive elements are mostly realized by classical holographic recording, by its modification - holographic record of stereogram, or as a record of computer generated hologram (Optical Holography, P. Hariharan, Cambridge University Press, 1996, or Practical Holography, G. Saxby, Prentice Hall International Ltd., 1994). Thus, it is possible to create an impressive image of three-dimensional scenes or objects. However, three-dimensional image by hologram or by its equivalent is not always suitable for use as diffractive security element, especially by reason that quality of image heavily depends on lighting conditions. To achieve an ideal image by way of a hologram a point source of light is required, which source, however, is not always available. When using a non-point source of light, which is in practice the most common case, for example daylight or a fluorescent light, etc.), the object being imaged is blurred, which makes it not readable especially for purposes of unambiguous identification required for safety elements. The blurring of the holograph image is a consequence of the fact that within a certain small surrounding area of some point of hologram the holograph diffractive structure contributes to imaging many points or whole recorded three-dimensional object or scene. Using a non-point (plain) lighting an imaging of corresponding part of object or scene into several directions at the same time is taking place and thus also many times one over another, which makes an impression of the blurring.

This blurring does not take place in relation to diffractive elements which are designed so that they carry record of only two-dimensional graphic motive. Thus, a certain point of structure of diffractive element represents unambiguously a given point of imaged graphic motive.

By the aforesaid reasons at present a three-dimensional sensation provided by holograph image is rarely used as safety element or, if it is used, then only as a part or accessory of safety element.

A proposed solution for three-dimensional sensation originating from a plain relief microstructure is disclosed for example in document WO 90/08338. A real or an imaginary object or scene in the form of macro-relief represents a relief scene for creating the microstructure. The object is matrix-sectioned into elementary parts, wherein each of the elementary parts forms an elementary surface. If the elementary surfaces are transferred through vertical projection into a plane, matrix of micro-relief surfaces (flats) originates, wherein, in corresponding places, the reflex properties of the surfaces correspond to reflex properties of the original macro-relief. The three-dimensional sensation of the micro-relief structure is then very similar to sensation obtained when viewing the macro-relief.

However, the minimal size of the micro-relief surfaces is limited in most practical cases and thus, the resulting image is limited by resolution and therefore, this way of creating micro-relief surfaces is suitable for creating larger motives. Principle limitation in the sense of elaboration of details of image can emerge when for the light reflected from elementary micro-relief surfaces dispersion prevails over reflected image - it is when diffraction effects start to act parasitically.

The invention seeks to provide for a diffractive element and method of forming the same, and of forming a three-dimensional image, having advantages over known such methods and elements.

### Summary of the invention

The present invention serves to remove the above mentioned drawbacks of the prior art by proposing new method of creating a three-dimensional image, a diffractive element and method of creating the same, and particularly a security diffractive element designed for example to protect notes, coins, credit cards or identification cards, documents, other valuable items, products etc.

The object of invention is achieved by method of creating a three-dimensional image, especially imitating a real or an imaginary relief scene, according to the present invention, substance of which consists in that a flat microrelief or otherwise modulated structure of a diffractive type is created, the structure comprising system of diffraction zones which are arranged so that in places of diffractive structure corresponding to places of the relief scene the diffraction zones have such periodicity and orientation that cause deflection of incident light in the same direction as the relief scene deflects an incident light, thus achieving a visible thee-dimensional and largely achromatic sensation of image, corresponding to the relief scene, when observing the diffractive structure regardless of conditions of lighting.

According to preferred embodiment of the invention to obtain largely achromatic sensation any local area of the diffractive structure that represents from the point of its function the incline of the relief at the corresponding place of the relief scene is divided to several sub-areas which differ by periodicity of comprised diffraction zones, wherein the periodicity of diffraction zones in the sub-areas is set so that for one wavelength deflection of light incident on the sub-area corresponds to deflection of light incident on the relief scene, so that with a suitable choice of wavelengths to which the structure is to be adjusted their mixing in the direction of observation takes place and the light deflected by the diffractive structure provides for the observer largely achromatic sensation.

According to another preferred embodiment of the invention, to obtain a largely achromatic sensation an area of the diffractive structure comprising periodical or quasi-periodical system of diffraction zones is created so that periodicity of diffraction zones is fluently changing across the area and thus creates conditions for deflection of incident light into desired direction across the whole colour spectra or its part, which, after mixing, in observed direction provides largely achromatic or white sensation for the observer, wherein the fluent change of periodicity takes place in direction perpendicular or longitudinal with respect to the system of diffraction zones.

Another embodiment of the invention proposes a method, according to which to obtain largely achromatic sensation a semi-random distribution of periodicity of diffraction zones is performed across the area of diffractive structure, which ensures conditions for deflection of light into desired direction for such representation of wavelengths that, after being mixed, in observed direction provide largely achromatic or white sensation for the observer.

It is advantageous to record the diffractive structure in a material whose optical properties such as e.g. transparency, reflectancy, index of refraction, are modulated by this recording or wherein the record creates on the surface of the material a microrelief which, similarly as the optical properties of the material, consequently changes properties of incident light such as amplitude and/or phase of the incident wave of light. In such a case, the recording material may advantageously comprise a material out of a group of materials: photographic emulsion, dichromated gelatine, photopolymer, photothermoplastic material, photoresist, electron beam resist, or other material which changes its optical properties based upon exposure to electromagnetic radiation, electrons or ions, directly, based on possible subsequent chemical or other treatment, material such as glass, metal or plastic to be treated by a relief working of surfaces.

According to another advantageous embodiment for recording diffraction zones a material enabling largely a phase type of modulation of incident light is used, wherein non-symmetric and/or symmetric development of profile of modulation is used.

According to another advantageous embodiment, the diffractive structure is created as part of diffractive element which further comprises a record of diffractive structure of a different type and/or non-diffractive - e.g. graphic structure which provides an optical sensation observable by the eye and/or comprises a hidden element observable using various aids e.g. microscope, laser beam or special reading devices.

Another advantageous embodiment discloses a method according to which, in order to create two or more images of different relief scenes, two or more sets of flats are positioned within the surface area of diffractive element, each of the sets comprising record of respective image. In such a case advantageously diffractive structures are provided and in this way recorded images are proposed in a manner such that images do not overlap under certain conditions of observation but they mutually overturn with a change of the angle of observation or incline or turning of the diffractive element.

According to another aspect of the invention, diffractive structure is created so that in a given local point it declines incident light into two or more sets of directions of propagation of declined light which for an observer create a visual sensation corresponding to two or more relief scenes and/or other visual sensation, or optionally they include other optical information.

According to another, particularly preferred embodiment, diffractive structure is created as a component of diffractive element that is a security diffractive element determined for authentication or identification of a bearing item such as e.g. a note, coin, credit card or identification card, product, identification document or other valuable item, wherein the security diffractive element is an integral part of the bearing item or the bearing item is provided additionally with the security diffractive element.

A diffractive element embodying the present invention can comprise a flat microrelief or otherwise modulated structure of a diffractive type, further comprising a system of diffraction zones which are arranged so that in places of diffractive structure corresponding to places of the relief scene they have such periodicity and orientation that cause deflection of incident light in the same direction as the relief scene deflects an incident light, for achieving a visible thee-dimensional and largely achromatic sensation of image corresponding to the relief scene when observing the diffractive structure regardless of conditions of lighting.

According to preferred embodiment of the diffractive element, local area of diffractive structure that from the point of its function represents the incline of the relief in the corresponding place of the relief scene is divided into several sub-areas which differ by periodicity of comprised diffraction zones, wherein the periodicity of diffraction zones in the sub-areas is such that for one wavelength deflection of light incident on the sub-area corresponds to deflection of light incident on the relief scene, so that with a suitable choice of wavelengths to which the structure is to be adjusted the mixing of light of these wavelengths into a largely white light takes place in the direction of observation.

It is advantageous if the area of the diffractive structure comprising periodical or quasi-periodical system of diffraction zones is arranged so that periodicity of diffraction zones is fluently changing across the area and thus creates conditions for deflection of incident light into desired direction across the whole colour spectra or its part, which, after mixing, in observed direction provides largely achromatic or white sensation for the observer, wherein the fluent change of periodicity takes place in direction perpendicular or longitudinal with respect to the system of diffraction zones.

According to another preferred embodiment of the diffractive element the area of diffractive structure has a semi-random distributed periodicity of diffraction zones to ensure conditions for deflection of light into desired direction for such representation of wavelengths that, after being mixed, in observed direction provide largely achromatic or white sensation for the observer.

The configuration of diffractive zones can advantageously be created from a relief scene described by its phase function which represents a change of phase of incident wave so that at the boundaries of adjacent zones a change of phase of incident wave by 2π or multiples of 2τ takes place and within a zone phase-change ranges from 0 to 2π or 0 to multiple of 2π, wherein in different places of diffractive structure these phase changes may correspond to different wavelengths of incident light.

According to another preferred embodiment, the diffractive structure can be is recorded in a material whose optical properties such as e.g. transparency, reflectancy, index of refraction, are modulated by this recording or the record creates on the surface of the material a microrelief which, similarly as optical properties of the material, consequently changes properties of incident light such as e.g. amplitude and/or phase of the incident wave of light. In such a case the recording material is preferably a material out of a group of materials: photographic emulsion, dichromated gelatine, photopolymer, photothermoplastic material, photoresist, electron beam resist, or other suitable material which changes its optical properties based upon exposure to electromagnetic radiation, electrons or ions, directly, based on possible subsequent chemical or other treatment, material such as glass, metal or plastic to be treated by a relief working of surfaces.

According to another preferred embodiment material for recording diffraction zones comprises a material enabling largely a phase type of modulation of incident light using symmetric and/or non-symmetric development of modulation profile.

The diffractive element may advantageously comprise diffractive structure recorded in the form of a microrelief reproducible by embossing, UV casting, molding, embossing into metal, plastic, paper and other materials, electroplating copying.

According to another preferred embodiment diffractive element comprises a record of a diffractive structure of a different type and/or non-diffractive, e.g. graphic, structure which provides an optical sensation observable by unarmed eye and/or comprises a hidden element observable using various aids e.g. microscope, laser beam or special reading devices.

According to another preferred embodiment, in order to create two or more images of various relief scenes the area of diffractive element comprises two or more sets of flats positioned one beside each other, each of the sets comprising diffractive structure bearing a record of respective image. In such a case diffractive structure of the individual recorded images may be arranged so that images do not overlap under certain conditions of observation but they mutually overturn with a change of the angle of observation or incline or turning of the diffractive element.

According to another preferred embodiment diffractive structure is arranged so that in a given local point it declines incident light simultaneously into two or more sets of directions of propagation of declined light, which for the observer create a visual sensation corresponding to two or more relief scenes and/or other visual sensation or optionally they include other optical information.

In another, particularly preferred embodiment, the diffractive element is created on a bearing item such as e.g. a note, coin, credit card or identification card, product, identification document or other valuable item, as its integral part or the bearing item is provided additionally with the diffractive element, for authentication or identification of the bearing item.

A method of creating a diffractive element according to one aspect of the present invention is characterized by a system of diffraction zones of a flat microrelief or otherwise modulated structure of a diffractive element arranged so that in places of the diffractive structure corresponding to places of relief scene the diffraction zones have such periodicity and orientation that cause deflection of incident light in the same direction as the relief scene deflects an incident light, for achieving a visible, thee-dimensional and largely achromatic sensation of image, corresponding to the relief scene, when observing the diffractive structure regardless of conditions of lighting. Diffractive structure may be recorded in a substrate (bearing material) of the diffractive element by means of technologies which can write (record) the proposed system of diffractive zones of diffractive element including a modulation profile into surface area. For the recording a writer with laser, electron or ion beam may be used, wherein the record is either latent i.e. diffractive structure itself originates by further treatment of the record material - for example by developing, etching, fixing, or it is a final one i.e. another treatment does not take place, or it is a combined one. Diffractive structure may also be produced by lithography and/or etching or deposition, or by working the substrate of diffractive element e.g. by engraving, evaporation.

The microrelief diffractive structure is preferably reproduced by copying by means of embossing, UV casting, molding, embossing into metal, plastic, paper and other materials, electroplating copying.

According to another, particularly preferred embodiment, the diffractive element is created on a bearing item such as e.g. a note, coin, credit card or identification card, product, identification document or other valuable item, as its integral part or the bearing item is provided additionally with the diffractive element e.g. using method of hot-stamping, as a self-adhesive label, especially for authentication or identification of the bearing item.

A security element according to the present invention can be planar in the sense of a common point and it includes microrelief or otherwise modulated structure of a diffractive type with a reduced chromatic aberration. Diffractive characteristics of the structure correspond to optical properties of a real or an imaginary three-dimensional object represented by the relief scene. The element comprising the structure is created in order to perform a three-dimensional and prevailingly non-colour sensation observed mainly by unarmed eye which imitates the above mentioned three dimensional object and which is practically independent of the type of illumination.

The present invention discloses solution of creation of three-dimensional effect (sensation or an image) from a planar relief structure of a diffractive optical element, suppressing chromatic aberration. However, the invention does not focus on a classic holographic image which has its limitation especially with regard to requirements of a quality ideal-spot lighting as described above. The invention takes advantage of imaging two-dimensional motives by means of diffractive structures so that sharpness of image is maintained under any lighting conditions. In addition, the invention adds to the image the three-dimensional sensation by means of replacing reflex or transmission properties of a real or an imaginary object by diffractive characteristics which then may provide for a very similar visual sensation. In view of the fact that diffractive structures generally operate with a substantially higher resolution near to wavelength of light or its multiples, there is practically no limitation as regards the complexity of object to be imaged. Contrary to the solution disclosed in document WO 90/08338, imitation of relief characteristics of object is not bound to matrix of discrete elementary microrelief flats (surfaces) but changes of these characteristics take place practically continuously.

The present invention concerns to creation of new diffractive element whose primary use is directed to field of optically variable elements used as authentication element to protect notes, coins, valuable items, identification documents (passports, visa documents etc.), plastic cards (credit or ID cards). Diffractive element which is a subject matter of the present invention provides the observer a visual sensation of three-dimensional image of a real or an imaginary object. The object has the form of a relief sculpture or a relief scene which is transparent or has surface reflecting incident light. Diffractive structure is designed in given places of diffractive element so that the structure deflects incident light into angles that are same or similar as for the light reflected or refracted by the observed object in the corresponding places thereof. Further, diffractive structure is designed so that it reduces chromatic aberration - i.e. so that under lighting in white light it provides the observer with an achromatic sensation of the observed object.

A diffractive element structure of the invention is generally to be realized mainly in a microrelief form which is suitable for a subsequent reproduction through technologies of relief replication. The present invention is however not limited to this embodiment of diffractive element structure only.

In this invention a new class of security element is disclosed with a three dimensional largely achromatic image imitating a real or imaginary relief scene but with a planar structure. A method of confirming the authenticity of such a security element is envisaged comprising a three -dimensional largely achromatic image especially imitating a real or an imaginary relief scene, comprising an activity which combines visual inspection of the image which appears to the observer as non planar from typical angles of observation, and similar to an engraved or embossed relief achieved by means of a die tool, and tactile inspection of the security element that demonstrates the security element and the image contained in are planar In some cases such an element can also be adapted to replay a diffractive image providing an intense colour replay from a sharp viewing angle ( near 90 degrees ) to provide an additional method of verification and this method of steep angle viewing ( 90 degrees ) also can be used to confirm the planar character of the device.

In an additional important secondary apsect of this invention an additional micro structural relief can also be introduced. This additional sub-relief is superposed on the original relief and can further be variably applied, for example, with its properties depending on directions or orientations of the original relief or this can be applied locally at certain designated areas to distinguish several regions of the original motif. This can usefully be used to provide a localised perception of surface texture to further enhance the three dimensional effect of the technique.

In another aspect of this invention there is proposed the use and combination of an additional micro-relief with its fine structural details below the resolution ability of a naked eye, together with variability of reflections and transmissions of specific elementary areas enables a visual imitation of various materials, structures and patterns.

Combining those two approaches as above , one can achieve a localized perception of various materials, including their surfaces, surface finishing, e.g. brushing, polishing etc., and additional textures. This advantageously causes a credible imitation of various materials, their surfaces and related optically/visually recognized properties (roughness). The technique can thus cover simulation of the appearance of a few basic materials like stones, fabrics, metals, paper.

From a broad spectrum of possible applications, there is the possible imitation of various paper surfaces such as the surface of standard copier paper, smoothened paper, banknotes paper, carton like paper with applications intaglio/embossing; standard fabrics woven by different manners, with various sizes on details on it; iron/metal or glass like surfaces, as well as an imitation of plastics (mat, cut, polished, and facets).

Using this additional microrelief technique the perception of the transparency can be emphasized by applying locally changing density of basic elements of the superposed sub-relief or by a proper choosing of preferred directions of diffracted light together with a combination with a general diffractive structure situated in a different plane than that of the original relief structure.

In another useful enhancement to this invention the security device can be combined with a background of deep (high relief, fine structure) grating structures ( such as the well known moth eye crossed grating structure in nature ) designed to minimise back reflection of incident light to provide a darker background and contrast enhancement of the achromatic image.

In manufacture typically the security element replaying an achromatic three dimensional image will be replicated a a surface releif structure replicated in foil, film and other such embossable media. Typically such media are metallised to provide a reflective surface for the diffractive effect. Such a structrue can be subsequently seletively demetallised into a pattern or dot pattern to provide an additional security feature and visual characteristic. A useful aspect of this is to create a security device which is demetallised around the outline of the three dimensional largely achromatic image and is subsequently metallised or coated with a substance differnt in colour to the first layer of metallisation, for example chrome by vacuum deposition or a coloured lacquer by gravure or other wet coating or printing methods , with a view to maximise the colour contrasts between the achromatic image and the background. Another possibility for this would be to use a dark coloured vacuum deposited metal reflector as the additional outline area single coating instead of the aluminium, for example chrome would be an appropriate candidate. In some cases it will also be advantage to use traditional diffractive effects from suface releif metallised structrues within the area surrounding the achromatic image to provide a colour shift or contrast to the features of the achromatic image. Another possibility is to combine the achromatic device with a surrounding area displaying thin film colour shift effects.

Another useful enhancement to this invention would be to coat the embossed security element replaying an achromatic three dimensional image with a transparent relector, for example a galss like substance of high refractive index such as vacuum deposited zinc sulphide, titanium dioxide or the like. This article could then be further vacuum or gravure coated/printed/ wet coated with a dark layer to act as a dark background or alternatively simply applied over a printed pattern on a document to provide areas of dark coatings. A preferred embodiment with hot stamping or transfer foils as known in the art would be to use a colour layer or colour coating as part or in conjunction with the transfer adhesive which can be heat actiavted ,or UV activated or pressure sensitive for example. A useful embodiement for a HRI coated achromatic device would be for example as a data protection over lay in passports, ID cards or similar document of value.

### Brief description of the drawings

The invention will now be described in detail, by way of example only, with reference to the accompanying drawings, in which the figures show as follows:
Fig. 1 illustrates an example of diffraction zones with varying periodicity and orientation;
Fig. 2 depicts an example of incidence and diffraction of beam on a structure with varying periodicity and orientation;
Fig. 3 shows deflection of incident light by relief scene and diffractive structure;
Fig. 4 shows an example of reflective or transparent object and directions of propagation of reflected or refracted (passed through) light;
Fig. 5 illustrates chromatic aberration of periodical diffractive structure;
Fig. 6 shows reduction of chromatic aberration by dividing certain area of diffractive structure into sub-areas;
Figs. 7a, 7b, 7c show reduction of chromatic aberration by continuous change of periodicity of diffraction zones across a given area of diffractive structure;
Figs. 8a, 8b, 8c show examples of modulation of recording material;
Fig. 9 shows example of non-symmetric modulation profile of diffraction zone;
Fig. 10 illustrates example of influence of modulation profile over reduction of parasitic directions of light propagation;
Fig. 11 depicts creation of diffraction zones of diffractive element from relief function of relief scene;
Fig. 12 shows division of area of diffractive element into flats in which various images of relief scenes are alternatively recorded; and
Fig. 13 shows example of simultaneous radiation of diffractive structure into several directions.

### Examples of embodiment of invention

Diffractive element according to the present invention includes a record of diffractive structure performed so as to achieve thee-dimensional and prevailingly achromatic sensation of image corresponding to real or imaginary relief scene when observing, especially by unarmed eye, diffractive element with light incident thereupon.

One of the preferred embodiments of diffractive element according to the present invention may be combined with a record of another diffractive or non-diffractive structures which provide an optical sensation observable by unarmed eye or include hidden elements observable using various aids e.g. microscope, laser beam or special reading devices etc.

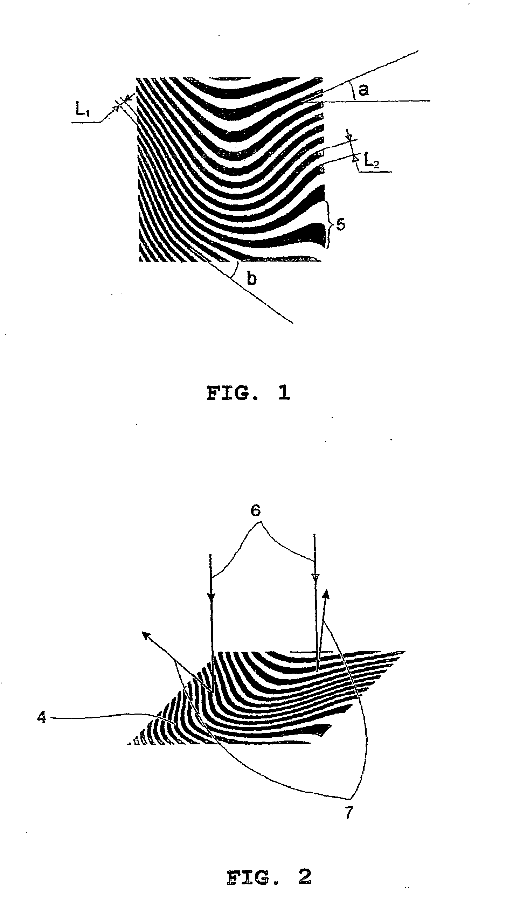

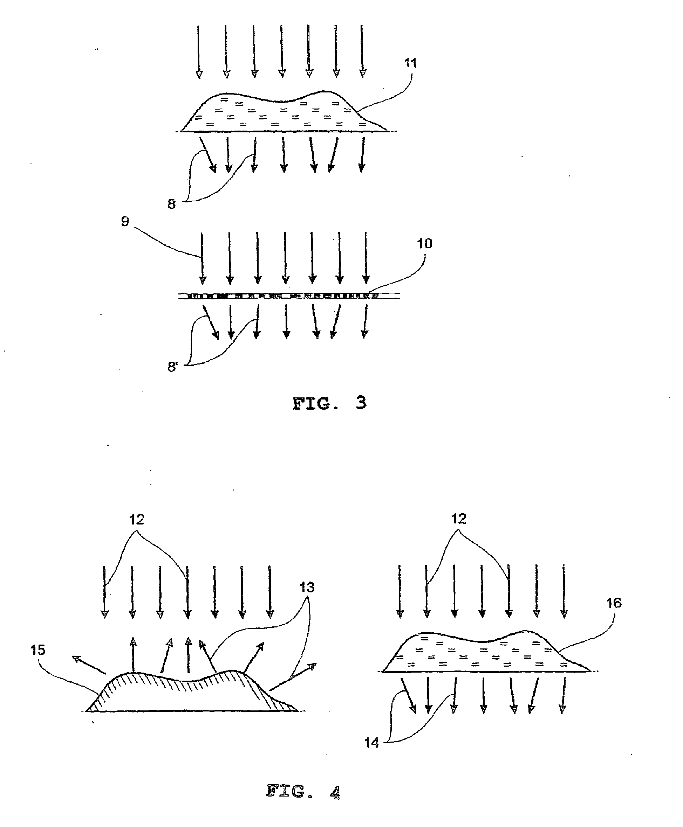

Diffractive structure according to the present invention is performed as a system of diffraction zones 5 which is recorded on the surface of diffractive element as shown in fig. 1. Diffraction zones 5 are locally characterized by their periodicity which corresponds locally to inverted value of period L₁, L₂ or width of zone 5 and by orientation (inclination) a, b . If light 6 is incident on diffractive structure 4 then it holds true that local periodicity determines degree of deflection of light and local orientation determines direction of light propagation after passing through or reflection 7.as shown in fig. 2. Generally, arrangement of diffractive structure 10 should ensure that incident light 9 which reflects from the structure 10 or passes there through is deflected into deflected light 8' in accordance with deflection (deflected light 8) caused by real or imaginary relief scene 11 as in fig. 3. Thus, it is possible to ensure that the three-dimensional sensation and the relief scene are as alike as possible, at the same time requiring that the sensation be largely non-colour - i.e. that the chromatic aberration typical of diffractive structures be suppressed (reduced).

However, in case of one of the advantageous embodiments of invention it is possible to purposely achieve colour sensation when creating resulting visual sensation by combining diffractive structure creating itself largely non-colour sensation with other types of diffractive or other structures or using colour properties of base (bearing) material.

The following paragraphs describe individual examples of how to achieve three-dimensional and non-colour sensation and examples of a concrete embodiment of diffractive element and possible combinations of several types of diffractive structures on the surface of diffractive element.

To achieve three-dimensional sensation of diffractive element it is necessary to adjust transmission and reflex properties of real or imaginary relief scene with diffractive properties of structure of the diffractive element. Relief scene 15, 16, depending on inclination of relief or also on optical properties of transparent material, reflects under certain angle (reflected light 13) or refracts (passed-through light 14) the incident light 12. As seen in fig. 4. diffractive element 10 should be designed so that locations which correspond to locations of the scene 11 have such a periodicity of diffraction zones 5 that the same deflection of incident light 9 is achieved in a given place again as seen in fig. 3. The periodicity and inclination (orientation, grade) may vary within range needed for achieving any deflection of incident light ranging +/-90 grades. Supposing largely perpendicular incidence of light during observation of diffractive element, angle range of deflection causes practical limitation for parameters of the relief scene. It is reasonable to transform into diffractive form only such relief scenes that have incline of relief in any place not exceeding +/-45° relative to its base plane. This limitation holds true especially for reflexive scenes, as regards transparent scenes the incline may range from about +/-20 to +/-80° depending on refractive index of relief scene.

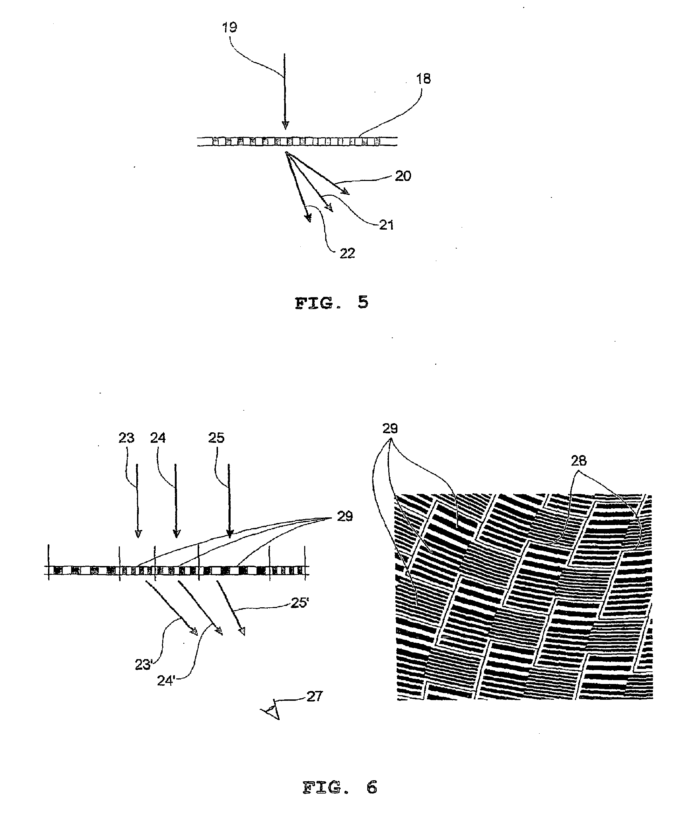

As indicated by fig. 5, diffractive structures generally exhibit colour dispersion which means that white light 19 incident on diffractive structure 18 is split into spectra components 20, 21, 22. Following the above described creation of three-dimensional sensation based upon change of local periodicity of diffractive structure it should be taken into account that for each wavelength of incident light different degree of deflection is obtained. In order to achieve achromatic sensation it is necessary to solve the problem of achromatism.

Generally, chromatic aberration can be reduced by increasing the spacing of lines of diffractive structure. When using periodicity over 10 micrometers the chromatic aberration from point of view of observation is only minor. This measure however results in limitation of group of relief scenes because maximal local inclination of scenes then should be substantially reduces. Thus, three-dimensional sensation would be limited, since relief scene as such would be too shallow. In order to retain a sufficiently strong three-dimensional sensation and at the same time considerably reduce the chromatic aberration, number of hereinafter described measures can be adopted. At the same time it is advantageous to design diffractive structure in the first diffraction order because chromatic aberration when operating in higher orders is more intense.

Local area of diffractive structure, whose periphery 28 can be of any shape and size and which from the view of its function represents inclination of relief in the corresponding place of the relief scene, can be divided into several sub-areas 29 which differ by their periodicity. Periodicity in the sub-areas 29 is set so that spectra components 23, 24, 25 of white light incident on corresponding sub-areas 29 are declined into directions 23', 24', 25' which correspond to direction of propagation of light deflected by the relief scene. With suitable choice of wavelengths for which the structure is to be tuned in the sub-areas, mixing of the wavelengths in observation direction takes place, which provides the observer 27 with white sensation as illustrated in fig. 6. Division into sub-areas may be arbitrary providing there is at least several zones of diffractive structure in a given sub-area. Also, the division into sub-areas need not be done across the whole surface of diffractive element, but only in areas where periodicity of lines of diffractive structure is higher and where the chromatic aberration manifests itself more strongly.

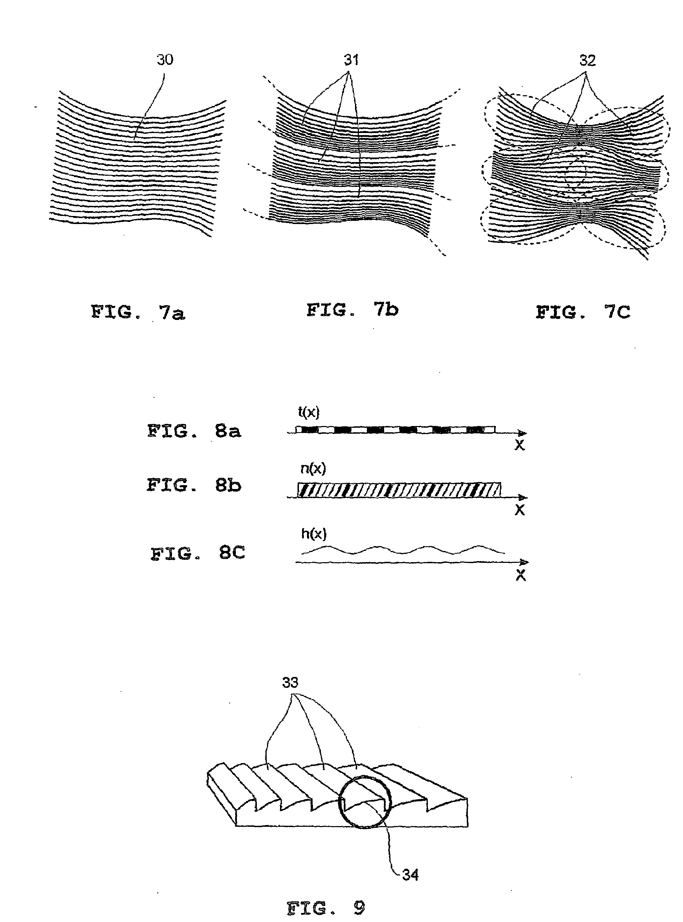

To achieve the mixing of various colour components of light at the outlet of a particular diffractive structure area, it is possible to use also some other suitable methods than the above mentioned method employing division into separate sub-areas. If a particular part of diffractive structure comprising periodical of quasi-periodical system of diffraction zones 30 is tuned so that it deflects light into demanded angle for one wavelength, it is possible to modify it using the following method. From figs. 7b and 7c, it can be seen that the periodicity of diffractive zones can be designed across the given areas 31, 32 of diffractive structure so that it changes continuously across the structure and creates conditions for desired deflection over the whole colour spectrum. The continuous change of the periodicity runs perpendicularly or longitudinally relative to system of diffraction zones as illustrated in figs. 7b and 7c and can be realized in various ways with regard to adjacent areas of diffractive structure.

Apart from the continuous control of periodicity over particular area of diffractive structure it is possible to use method of semi-random distribution of periodicity over the area. The distribution should ensure such an arrangement of periodicity in given area that light deflected into desired direction is present in the wavelengths that after mixing provide for the observer non-colour or white sensation.

Diffractive structure having the above described properties and being comprised in diffractive element according to the present invention can be recorded or transferred in the material bearing the diffractive element. The diffractive structure may be recorded or transferred into various materials that are capable to locally influence especially the amplitude and phase of incident light wave. Process of recording causes changes of properties of recording material which consequently change characteristics of incident light, i.e. mainly the amplitude and phase. Thus, the recorded system of diffraction zones of diffractive structure is formed by modulation of optical properties of the recording material. Typically, it is possible to change material transparency or reflectance, index of refraction, or to create a microrelief on the surface of the material by way of modulation in fig. 8. Thus, we can talk about modulation of various type - amplitude, index, relief modulation or their combination. For recording diffractive structure we can use broad range of recording materials, such as photographic emulsions, dichromated gelatine, photopolymers, photo-thermoplastic materials, photoresists, electron beam resists etc. In addition to materials that change their properties following exposure to electromagnetic radiation, electrons or ions, based on possible subsequent chemical or other treatment, diffractive struture can be recorded for example also by a relief working of surfaces of many materials, typically by engraving into glass, metal, plastic etc. If diffractive structure is recorded - i.e. there is already a primary record, it is possible to transfer or copy it into the same or other bearing (base) material.

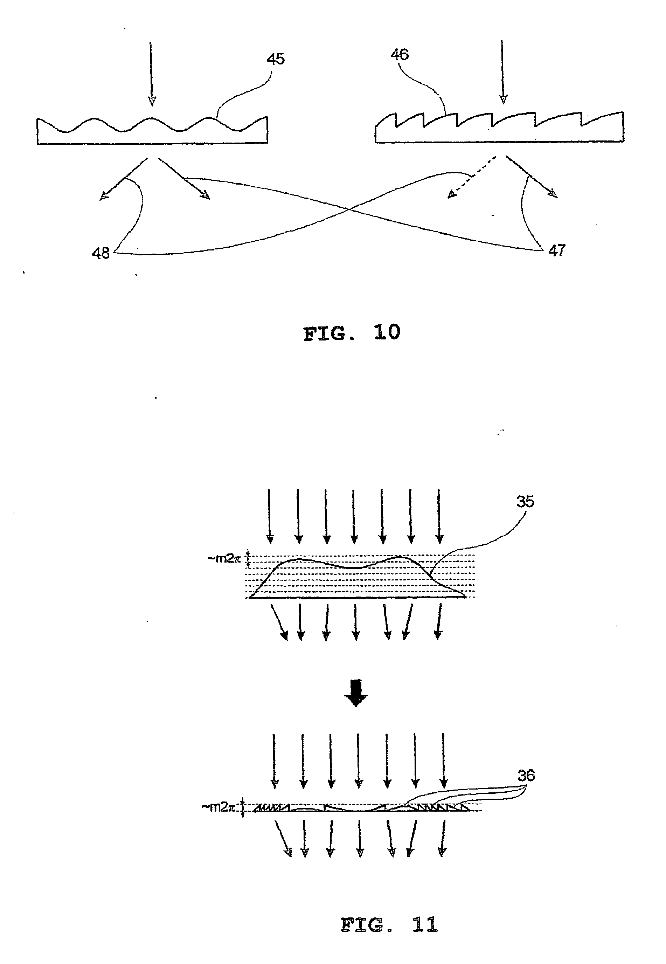

The type, degree and profile of modulation of optical characteristics of the bearing material are from the point of expressiveness of the effect to be provided by diffractive element (diffraction effectiveness) an important parameter which has to be taken into account for the recording and which should be in conformity mainly with local periodicity of zones 33 of diffractive structure. Term "profile of modulation" means development of change of material properties within one diffraction zone 34 as illustrated in fig. 9. While local periodicity influences the angle of deflection of incident light having a definite wavelength, the type, degree and profile of modulation will significantly influence what part of energy of incident light will radiate in the deflected direction, i.e. it will influence diffraction effectiveness (efficiency) of diffractive element. In order to maximize diffraction effectiveness of diffractive element it is recommended to use phase types of modulation only for the recording, i.e. such types that during interaction of light with the modulated material practically cause change only in the phase of incident light and not in its amplitude. For such an embodiment of diffractive element, the bearing material of the element should be modulated from the point of refractory index, relief or to use a combination of these modulations. From fig. 10, it can be seen that another enhancement of diffraction effectiveness can be made by non-symmetric profile 46 of index or relief modulation, thus reducing parasitic directions 48 of deflected light propagation originating during diffraction to the benefit of desired direction 47 of propagation of deflected light. In case of symmetric profiles 45 of index or relief modulation, an effective reduction of parasitic directions of light propagation cannot be provided.

Generally, diffraction efficiency (effectiveness) is a degree of quality of diffractive element and its optimization is governed by standard rigorous or approximation theories of diffraction. Therefore, in addition to determining periodicity of zone system of diffractive structure recorded in the bearing material which causes deflection of incident light according to the relief scene, also optimization of degree and profile of modulation of the bearing material should be performed.

When designing diffractive structure of a target diffractive element the following procedure can be adopted. Relief of scene 35 can be seen as a phase function which influences the phase of incident wave of light. By means of approximation of local plain wave following from wave theory of light phase function of relief scene can be transformed into zones 36 which at adjacent interfaces change phase of incident wave of light by 2π or its multiples as can be seen in fig. 11. In this way it is possible in the first approximation to determine for diffractive structure local periodicity and its relation to degree of modulation and modulation profile, in this case relief profile. When transforming the phase function of the relief scene into individual zones of diffractive structure it is possible to progress so that chromatic aberration of diffractive structure is reduced using the above described methods. In addition, at the same time relief profile of diffractive structure can be optimized by means of rigorous or approximation theories of diffraction to achieve an optimal diffraction efficiency.

All the above described methods of designing diffractive structure of diffractive element can be arbitrarily combined.

The recording as such of diffractive structure into the bearing material of diffractive element can be performed by means of technologies that are capable of recording designed system of diffraction zones of diffractive element including the modulation profile into the area of diffractive element. Recording apparatuses with a laser, electron or ion beam which records the diffractive structure can be used for the recording. Such a record can be either latent - i.e. diffractive structure as such originates by further treatment of recording material

(e.g. developing, etching, fixation etc.) or final - i.e. there is no need for another treatment, or it can be a combined one. Diffractive structure can also be produced by lithography methods in optional combination with etching or deposition methods, or methods of working the bearing material of diffractive element by engraving, vaporization etc. can be used.

The used method of record will influence the quality of diffractive structure in the sense of preciseness of drawing diffraction zones and further, it will influence the choice of modulation profile type. Final modulation profile can be saw-like, binary, quasi-binary, multilevel, continuously variable etc.

The individual methods of recording and choices of modulation profile can be arbitrarily combined for the purpose of recording diffractive structure of the target diffractive element.

In order to produce diffractive element in larger quantities it is necessary to secure its repeatable transmission or copying into the same or different material. The copying may be performed by various methods: e.g. by contact or projection lithography, contact copying, galvanic multiplication, plastic foil or other material pressing, injection moulding, embossing, UV curing etc.

The above described embodiments of diffractive element according to invention can be broadened by several methods, thus achieving another advantageous (preferred) embodiments of invention.

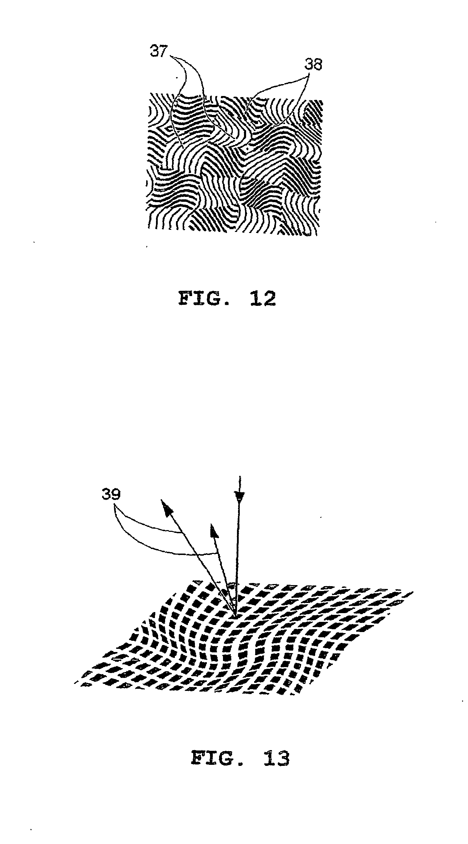

Two or more images of different relief scenes can be placed on the same area of diffractive element. The whole or a part of the area of diffractive element can be arbitrarily divided into two or more sets of flats 37 and 38, wherein each set includes a diffractive structure carrying record of a corresponding image as in fig. 12. The division into flats may be visible to unarmed eye or, if demanded so, the flats are of a size below resolution to unarmed eye. Moreover, diffractive structure of individual - this way recorded images can be designed so that the images do not overlap under certain observation conditions but they mutually turn over with a change of observation angle or incline or turning of the diffractive element.

Based upon principle of the above mentioned division of diffractive element into flats also other diffractive or even graphic structures (e.g. diffraction gratings, Fourier diffractive structures, micro and nano graphic elements etc.) which provide other visual or hidden effect than the effect provided by diffractive record of relief scene described above can be recorded into flats instead of another images of relief scenes.

Another advantageous embodiments of diffractive element according to invention can be performed as follows. From fig. 13, it will be appreciated that the diffractive structure can be designed so that in a given point it declines incident light simultaneously into two or more directions 39. These directions of propagation may form sets of propagation directions which create for the observer visual sensation corresponding to two or more relief scenes similarly as in the case of the above mentioned example of embodiment of diffractive structure divided into sets of flats. Moreover, corresponding sets of propagation directions may create, in addition to visual sensation corresponding to relief scene, also another visual sensation or optionally they can comprise any other optical information. As indicated in fig. 13, the system of diffraction zones of such a diffractive structure is substantially more complex since periodicity in a given area of structure must be designed in two or more independent directions.

The use of the described diffractive element is primarily directed to the area of security elements designated as DOVID (diffractive elements with optically variable image). These elements are used as authentication elements to protect notes, coins, valuable items, identification documents (passports, visa documents etc.), plastic cards (credit or ID cards) etc. At present, these elements most often have form of a relief structure which is carried by various types of foils or by plastic, metal or other substrates. Relief structure may be directly printed into final product or it can be transferred onto the final product by various ways: as self-adhesive label, by means of hot embossing, by lamination method etc.

In some examples the authenticity of a security element with a three dimensional largely achromatic image imitating a real or imaginary relief scene but with a planar structure. the is confirmed by an activity which combines visual inspection of the image which appears to the observer as non planar from typical angles of observation, and similar to an engraved or embossed relief achieved by means of a die tool, and tactile inspection of the security element that demonstrates the security element and the image contained in are planar. In other examples such an element can also be adapted to replay a diffractive image providing an intense colour replay from a sharp viewing angle (near 90 degrees) to provide an additional method of verification.

In other examples of this invention an additional micro structural relief can also be introduced. This additional sub-relief is superposed on the original relief and can further be variably applied, for example, with its properties depending on directions or orientations of the original relief or this can be applied locally at certain designated areas to distinguish several regions of the original motif. This can usefully be used to provide a localised perception of surface texture to further enhance the three dimensional effect of the technique.

In another example of this invention an additional micro-relief can also be used in combination, the additioanl relief having its fine structural details below the resolution ability of a naked eye, which together with variability of reflections and transmissions of specific elementary areas enables a visual imitation of various materials, structures and patterns.

Combining those two approaches as above , one can achieve an examples with localized perception of differnt various materials surface and surface finishing, and additional textures to provide a credible likeness of various materials, their surfaces and related optically/visually recognized properties (roughness). So examples of this invention can include the simulation of the appearance of materials like stones, fabrics, metals, papers within the achromatic device. Typical examples include various paper surfaces - surface of a standard copier paper, smoothened paper, banknotes paper, carton like paper with applications intaglio/embossing; standard fabrics woven by different manners, with various sizes on details on it; iron/metal or glass like surfaces, as well as an imitation of plastics (mat, cut, polished, and facets).

In other examples the additioanl microrelief technique can be use to enhance the perception of the transparency can be emphasized by locally changing the density of basic elements of the superposed sub-relief or by a proper choosing of preferred directions of diffracted light together with a combination with a general diffractive structure situated in a different plane than that of the original relief structure.

In another example the security device can be combined with a background of deep (high relief, fine structure) grating structures designed to minimise back reflection of incident light to provide a darker background and contrast enhancement of the achromatic image.

Examples of teh security elements would typically be manufactured buy embossed replication as a surface releif structure replicated in foil, film and other such embossable media. Typically such media are metallised to provide a reflective surface for the diffractive effect. Such a structrue can be subsequently seletively demetallised into a pattern or dot pattern to provide an additional security feature and visual characteristic. A useful example is to create a security device which is demetallised around the outline of the three dimensional largely achromatic image and is subsequently metallised or coated with a substance different in colour to the first layer of metallisation, for example chrome by vacuum deposition or a coloured lacquer by gravure or other wet coating or printing methods , with a view to maximise the colour contrasts between the achromatic image and the background. In another example a dark coloured vacuum deposited metal reflector could be used for example chromium. In some cases it will also be advantage to use traditional diffractive effects from suface releif metallised structrues within the area surrounding the achromatic image to combine with thin film colour shift effects.

In another example enhancement the embossed security element replaying an achromatic three dimensional image with a transparent relector, for example a glass like substance of high refractive index such as vacuum deposited zinc sulphide, titanium dioxide or the like. This article could then be further vacuum or gravure coated/printed/ wet coated with a dark layer to act as a dark background or alternatively simply applied over a printed pattern on a document to provide areas of dark coatings. A preferred embodiment with hot stamping or transfer foils as known in the art would be to use a colour layer or colour coating as part or in conjunction with the transfer adhesive which can be heat actiavted ,or UV activated or pressure sensitive for example. A useful example for a HRI coated achromatic device would be as a data protection over lay in passports, ID cards or similar document of value.

## Claims

1. A diffractive element, comprising a flat microrelief or otherwise modulated structure (10) of a diffractive type arranged for imitating a relief scene, comprising diffraction zones (5) arranged so that at locations in the diffractive structure (10) corresponding to respective locations in the relief scene (11) the diffraction zones have such periodicity and orientation (a, b) so as to cause deflection of incident light (9) in the same direction as the relief scene (11) would deflect incident light, for achieving a visible three-dimensional and largely achromatic sensation of image corresponding to the relief scene (11).

2. The diffractive element according to Claim 1, **characterized in that** a local area of diffractive structure (10) that is arranged to represent an incline of the relief at the corresponding place of the relief scene (11) is divided into sub-areas (29) which differ by periodicity of diffraction zones (5), wherein the periodicity of diffraction zones (5) in the sub-areas is such that for one wavelength deflection of light incident on the sub-area (29) corresponds to deflection of light incident on the relief scene (11), such that through selection of wavelengths to which the structure (10) is to be adjusted the mixing of light of these wavelengths into substantially white light takes place in the direction of observation.

3. The diffractive element according to Claim 1 or 2, **characterized in that** an area (31, 32) of the diffractive structure (30) comprising periodical or quasi-periodical system of diffraction zones (5) is arranged so that periodicity of diffraction zones (5) changes fluently across the area (31, 32) and thus creates conditions for deflection of incident light into desired direction across the whole colour spectra or its part, which, after mixing, in observed direction provides largely achromatic or white sensation for the observer, wherein the fluent change of periodicity takes place in direction perpendicular or longitudinal with respect to the system of diffraction zones (5).

4. The diffractive element according to any one of Claims 1 to 3, **characterized in that** an area of the diffractive structure (10) has a semi-random distributed periodicity of diffraction zones (5) to ensure conditions for deflection of light into desired direction for such representation of wavelengths that, in the observed direction and after being mixed provide substantially achromatic or white sensation for the observer.

5. The diffractive element according to any one of Claims 1 to 4, **characterized in that** diffractive zones (36) are created from a relief scene (35) described by its phase function which represents a change of phase of incident wave so that at the boundaries of adjacent zones a change of phase of incident wave by 2π or multiples of 2π takes place and within a zone (36) phase change ranges from 0 to 2π or 0 to multiple of 2π, wherein in different places of diffractive structure these phase changes may correspond to different wavelengths of incident light.

6. The diffractive element according to any one of Claims 1 to 5, and including a further micro-structural relief superposed on the original modulated structure (10).

7. A diffractive element as claimed in Claim 6, wherein the said further micro-structural relief is arranged such that its diffractive properties are dependent upon the direction and the co-orientations of the original modulated structure (10).

8. A diffractive element as claimed in Claim 6, wherein the said further micro-structural relief is applied locally at locations so as to distinguish one or more regions of the original modulated structure (10).

9. A diffractive element as claimed in Claim 6, 7 or 8, and including a micro-relief structure having structural detail below the resolution ability of the naked eye.

10. A diffractive element as claimed in Claim 9, wherein the detail of the additional micro-relief structure varies in density so as to provide for the perception of transparency.

11. A diffractive element as claimed in Claim 9, wherein the additional micro-relief structure is located in a different plane to that of the original modulated structure (10) for the selection of the direction of diffractive light so as to provide for the perception of transparency.

12. A diffractive element as claimed in any one of Claims 6 to 11, wherein the further micro-structural relief is arranged to simulate surface texture and/or finish.

13. The diffractive element according to any one of Claims 1
to 12, **characterized in that** diffractive structure (10) is recorded in a material whose optical properties such as e.g. transparency, reflectancy, index of refraction, are modulated by this recording or the record creates on the surface of the material a microrelief which, similarly as optical properties of the material, consequently changes properties of incident light such as e.g. amplitude and/or phase of the incident wave of light.

14. The diffractive element according Claim 13, **characterized in that** the recording material is a material out of a group of materials: photographic emulsion, dichromated gelatine, photopolymer, photothermoplastic material, photoresist, electron beam resist, or other suitable material which changes its optical properties based upon exposure to electromagnetic radiation, electrons or ions, directly, based on possible subsequent chemical or other treatment, material such as glass, metal or plastic to be treated by a relief working of surfaces.

15. The diffractive element according to any one of Claims 1 to 14, **characterized in that** material for recording diffraction zones (5) is a material enabling substantially a phase type of modulation of incident light using symmetric (45) and/or non-symmetric (46) development of modulation profile.

16. The diffractive element according to any one of Claims 1 to 15, **characterized in that** it comprises diffractive structure recorded in the form of a microrelief reproducible by embossing, UV casting, molding, embossing into metal, plastic, paper and other materials, electroplating copying.

17. The diffractive element according to any one of Claims 1 to 15, **characterized in that** it comprises a record of a diffractive structure of a different type and/or non-diffractive, e.g. graphic, structure which provides an optical sensation observable by unarmed eye and/or comprises a hidden element observable using various aids e.g. microscope, laser beam or special reading devices.

18. The diffractive element according to any one of Claims 1 to 17, **characterized in that** to create two or more images of various relief scenes the area of diffractive element comprises two or more sets of flat microrelief or otherwise modulated structure (37, 38) positioned one beside each other, each of the sets comprising a diffractive structure (10) bearing a record of respective image.

19. The diffractive element according to Claim 18, **characterized in that** diffractive structure (10) of the individual recorded images is arranged so that images do not overlap under certain conditions of observation but they mutually tilt with a change of the angle of observation or incline or turning of the diffractive element.

20. The diffractive element according to any one of Claims 1 to 19, **characterized in that** diffractive structure is arranged so that in a given local point it deflects incident light simultaneously into two or more sets of directions (39) of propagation of deflected light, which for the observer create a visual sensation corresponding to two or more relief scenes and/or other visual sensation or optionally they include other optical information so as to provide for an image switch.

21. The diffractive element according to any one of Claims 1 to 20, formed and on a bearing item such as e.g. a note, coin, credit card or identification card, product, identification document or other valuable item, as its integral part or the bearing item is provided additionally with the diffractive element, for authentication or identification of the bearing item.

22. An authentication security device including a diffractive element as defined in any of Claims 1 to 21.

23. A security device according to Claim 22 and including a background region comprising a deep grating structure arranged to reduce back-reflection of light for a darker background and to provide for enhancement in contrast.

24. A security device according to Claim 23, wherein the deep grating structure comprises a high relief or fine structure or a moth-eye-crossed diffraction grating structure.

25. A security device according to any one of Claims 22-24 and including a patterned demetallised region arranged to provide for a further visual characteristic.

26. A security device according to Claim 25 which is demetallised around the outline of the three-dimensional image and includes a further layer of demetallised or coated layer different in colour from the upper said matellization.

27. A security device according to Claim 26 and including a dark-coloured vacuum deposited metal reflector serving as an additional outline area coating.

28. A security device according to any one of Claims 22-27 and including surface-relief matallized structures within the areas surrounding the three-dimensional image.

29. A security device according to any one of Claims 22-28, wherein the three-dimensional image is arranged to be surrounded by an area displaying thin-film colour-shift effects.

30. A security device according to any one of Claims 22-29, wherein the diffractive element is coated with an underlying transparent reflector layer.

31. A security device according to in Claim 30, wherein the transparent reflector comprises a substance of high refractive index.

32. A security device according to Claim 31 and including a further underlying dark coated layer serving as a dark background to the device, the dark layer having been vacuum or gravure coated/printed or wet coated onto the device.

33. A method of creating a three-dimensional image, especially imitating a real or an imaginary relief scene, **characterized in that** a flat microrelief or otherwise modulated structure (10) of a diffractive type is created, the structure (10) comprising diffraction zones (5) which are arranged so that in places of diffractive structure (10) corresponding to places of the relief scene (11) the diffraction zones (5) have such periodicity and orientation (a, b) that cause deflection of incident light (9) in the same direction as the relief scene (11) deflects an incident light, thus achieving a visible thee-dimensional and largely achromatic sensation of image, corresponding to the relief scene (11) when observing the diffractive structure (10) regardless of conditions of lighting.

34. The method according to Claim 33, **characterized in that** to obtain largely achromatic sensation any local area of the diffractive structure (10) that represents from the point of its function the incline of the relief at the corresponding place of the relief scene (11) is divided to several sub-areas (29) which differ by periodicity of diffraction zones (5), wherein the periodicity of diffraction zones (5) in the sub-areas (29) is set so that for one wavelength deflection of light incident on the sub-area (29) corresponds to deflection of light incident on the relief scene (11), so that with a suitable choice of wavelengths to which the structure (10) is to be adjusted their mixing in the direction of observation takes place and the light deflected by the diffractive structure (10) provides for the observer (27) substantially achromatic sensation.

35. The method according to Claim 33 or 34 **characterized in that** to obtain largely achromatic sensation an area (31, 32) of the diffractive structure (30) comprising periodical or quasi-periodical system of diffraction zones (5) is created so that periodicity of diffraction zones (5) is fluently changing across the area (31, 32) and thus creates conditions for deflection of incident light into desired direction across the whole color spectra or its part, which, after mixing, in observed direction provide largely achromatic or white sensation for the observer, wherein the fluent change of periodicity takes place in direction perpendicular or longitudinal with respect to the system of diffraction zones (5).

36. The method according to Claim 33, 34 or 35 **characterized in that** to obtain largely achromatic sensation a semi-random distribution of periodicity of diffraction zones (5) is performed across the area of diffractive structure (10), which ensures conditions for deflection of light into desired direction for such representation of wavelengths that in the observed direction and after being mixed provide substantially achromatic or white sensation for the observer.

37. A method according to any one of Claims 33 to 36, and including providing a further micro-structural relief superimposed on the original modulated structure (10).

38. A method according to Claim 37 wherein the said further micro-structural relief is arranged such that it diffractive properties are dependent upon the direction and the co-orientations of the original modulated structure (10).

39. A method as claimed in Claim 37, and providing a further micro-structural relief locally at locations so as to distinguish one or more regions of the original modulated structure (10).

40. A method as claimed in Claim 37, 38 or 39 and including the provision of a micro-relief structure adding structural detail below the resolution ability of the naked eye.

41. A method as claimed in Claim 40, wherein the detail of the additional micro-relief structure is arranged to vary in density so as to provide for the perception of transparency.

42. A method as claimed in Claim 40, wherein the additional micro-relief structure is located in a different plane to that of the original modulated structure (10) for the selection of the direction of diffractive light so as to provide the perception of transparency.

43. A method as claimed in any one of Claims 33 to 42, and including the steps of creating the diffractive zones (36) from a relief scene (35) described by its phase function which represents a change of phase of incident waves so that at the boundaries of adjacent zones a change of phase of instant wave by 10π or multiples of 2π takes place and within a zone (36) phase change ranges from 0 to 2π or 0. to a multiple of 2π, wherein in different places of diffractive structure such phase changes may correspond to different wavelengths of incident light.

44. The method according to any one of Claims 33 to 43, **characterized in that** diffractive structure (10) is recorded in material whose optical properties such as e.g. transparency, reflectancy, index of refraction, are modulated by this recording or the record creates on the surface of the material a microrelief which, similarly as the optical properties of the material, consequently changes properties of incident light such as amplitude and/or phase of the incident wave of light.

45. The method according to Claim 44, **characterized in that** the recording material is a material out of a group of materials: photographic emulsion, dichromated gelatine, photopolymer, photothermoplastic material, photoresist, electron beam resist, or other material which changes its optical properties based upon exposure to electromagnetic radiation, electrons or ions, directly, based on possible subsequent chemical or other treatment, material such as glass, metal or plastic to be treated by a relief working of surfaces.

46. The method according to any one of Claims 33 to 45, **characterized in that** for recording diffraction zones (5) a material enabling substantially phase type of modulation of incident light is used, wherein non-symmetric and/or symmetric development of profile of modulation is used.

47. The method according to any one of Claims 33 to 46, **characterized in that** diffractive structure (10) is created as a part of a diffractive element which further comprises a record of a diffractive structure of a different type and/or non-diffractive, e.g. graphic, structure which provides an optical sensation observable by unarmed eye and/or comprises a hidden element observable using various aids e.g. microscope, laser beam or special reading devices.

48. The method according to any one of Claims 33 to 47, **characterized in that** to create two or more images of different relief scenes two or more sets of flat microrelieft or otherwise modulated structures (37, 38) are positioned within the surface area of diffractive element, each of the sets (37, 38) comprising record of respective image.

49. The method according to Claim 48, **characterized in that** diffractive structure (10) of the individual, in this way recorded images is proposed so that images do not overlap under certain conditions of observation but they mutually tilt with a change of the angle of observation or incline or turning of the diffractive element.

50. The method according to any one of Claims 33 to 49, **characterized in that** diffractive structure is created so that in a given local point it declines incident light into two or more sets of directions (39) of propagation of declined light, which for an observer create a visual sensation corresponding to two or more relief scenes and/or other visual sensation, or optionally they include other optical information.

51. The method according to any one of Claims 33 to 50, **characterized in that** diffractive structure (10) is created as a component of diffractive element that is a security diffractive element determined for authentication or identification of a bearing item such as e.g. a note, coin, credit card or identification card, product, identification document or other valuable item, wherein the security diffractive element is an integral part of the bearing item or the bearing item is provided additionally with the security diffractive element.

52. A method of creating a diffractive element, **characterized in that** diffraction zones (5) of a flat microrelief or otherwise modulated structure (10) of a diffractive element are arranged so that in places of the diffractive structure (10) corresponding to places of relief scene (11) the diffraction zones (5) have such periodicity and orientation (a, b) that cause deflection of incident light (9) in the same direction as the relief scene (11) deflects an incident light, for achieving a visible, thee-dimensional and largely achromatic sensation of image, corresponding to the relief scene (11), when observing the diffractive structure (10) regardless of conditions of lighting.

53. A method of creating a diffractive element as claimed in Claim 52 and including the step of providing a further micro-structural relief superimposed on the original modulated structure (10).

54. A method as claimed in Claim 53, wherein the further micro-structural relief is arranged such that this diffractive properties are dependent upon the direction and co-orientations of the original modulated structure (10).

55. A method as claimed in Claim 53, and including the step of providing the further micro-structural relief locally at locations so as to distinguish one or more regions of the original modulated structure (10).

56. A method as claimed in Claim 53, 54, or 55, wherein the micro-relief structure is provided with structural detail below the resolution ability of the naked eye.

57. A method as claimed in Claim 56, and including the step of varying the detail of the additional micro-relief structure indensity so as to provide for the perception of transparency.

58. A method as claimed in Claim 56, and including separately locating the additional micro-relief structure in a different plane of that of the original modulated structure for the selection of the direction of diffractive light so as to provide for the perception of transparency.

59. The method according to any one of Claims 52 to 58, wherein the said further micro-structural relief is arranged to simulate surface texture and/or finish.

60. The method according to any one of Claims 52 to 59, **characterized in that** the diffractive structure is recorded in a substrate (bearing material) of the diffractive element by means of technologies which can write the proposed system of diffractive zones of diffractive element including a modulation profile into surface area.

61. The method according to Claim 60, **characterized in that** for the recording a writer with laser, electron or ion beam is used, wherein the record is either latent i.e. diffractive structure itself originates by further treatment of the record material - for example by developing, etching, fixing, or it is a final one i.e. another treatment does not take place, or it is a combined one.

62. The method according to Claim 60, **characterized in that** the diffractive structure is produced by lithography and/or etching or deposition, or by working the substrate of diffractive element e.g. by engraving, evaporation.

63. The method according to any one of Claims 52 to 62, **characterized in that** the microrelief diffractive structure is reproduced by copying by means of embossing, UV casting, molding, embossing into metal, plastic, paper and other materials, electroplating copying.

64. The method according to any one of Claims 52 to 63, **characterized in that** diffractive element is created on a bearing item such as e.g. a note, coin, credit card or identification card, product, identification document or other valuable item, as its integral part or the bearing item is provided additionally with the diffractive element e.g. using method of hot-stamping, as a self-adhesive label, especially for authentication or identification of the bearing item.

## Patentansprüche

1. Diffraktives Element, umfassend eine flache Mikrorelief- oder anderweitig modulierte Struktur (10) eines diffraktiven Typs, die dazu angeordnet ist, ein Reliefmotiv zu imitieren, umfassend Diffraktionszonen (5), die so angeordnet sind, dass an jeweiligen Orten im Reliefmotiv (11) entsprechenden Orten in der diffraktiven Struktur (10) die Diffraktionszonen eine derartige Periodizität und Orientierung (a, b) haben, dass Ablenkung von einfallendem Licht (9) in der selben Richtung bewirkt wird, in der das Reliefmotiv (11) einfallendes Licht ablenken würde, um eine sichtbare dreidimensionale und größtenteils achromatische Wahrnehmung eines Bilds zu erreichen, das dem Reliefmotiv (11) entspricht.

2. Diffraktives Element nach Anspruch 1, **dadurch gekennzeichnet, dass** ein lokaler Bereich der diffraktiven Struktur (10), der dazu angeordnet ist, eine Neigung des Reliefs am entsprechenden Ort im Reliefmotiv (11) zu repräsentieren, in Unterbereiche (29) aufgeteilt ist, die sich durch Periodizität von Diffraktionszonen (5) unterscheiden, wobei die Periodizität von Diffraktionszonen (5) in den Unterbereichen derart ist, dass für eine Wellenlänge Ablenkung von auf den Unterbereich (29) einfallendem Licht der Ablenkung von auf das Reliefmotiv (11) einfallendem Licht entspricht, so dass durch Auswahl von Wellenlängen, auf die die Struktur (10) einzustellen ist, das Mischen von Licht dieser Wellenlängen zu im Wesentlichen weißem Licht in der Beobachtungsrichtung stattfindet.

3. Diffraktives Element nach Anspruch 1 oder 2, **dadurch gekennzeichnet, dass** ein Bereich (31, 32) der diffraktiven Struktur (30), der ein periodisches oder quasiperiodisches System von Diffraktionszonen (5) umfasst, so angeordnet ist, dass sich die Periodizität von Diffraktionszonen (5) fließend über den Bereich (31, 32) ändert und so Bedingungen für die Ablenkung von einfallendem Licht in die gewünschte Richtung über das ganze Farbspektrum oder dessen Teil erzeugt, das nach dem Mischen in der Beobachtungsrichtung eine größtenteils achromatische oder weiße Wahrnehmung für den Beobachter bereitstellt, wobei die fließende Änderung der Periodizität in der Senkrecht- oder Längsrichtung gegenüber dem System von Diffraktionszonen (5) stattfindet.

4. Diffraktives Element nach einem der Ansprüche 1 bis 3, **dadurch gekennzeichnet, dass** ein Bereich der diffraktiven Struktur (10) eine halbzufällig verteilte Periodizität von Diffraktionszonen (5) aufweist, um Bedingungen für die Ablenkung von Licht in die gewünschte Richtung für eine derartige Repräsentation von Wellenlängen sicherzustellen, das sie in der Beobachtungsrichtung und nach dem Mischen eine im Wesentlichen achromatische oder weiße Wahrnehmung für den Beobachter bereitstellen.

5. Diffraktives Element nach einem der Ansprüche 1 bis 4, **dadurch gekennzeichnet, dass** diffraktive Zonen (36) von einem Reliefmotiv (35) erzeugt werden, das von seiner Phasenfunktion beschrieben wird, die eine Änderung der Phase einfallender Wellen repräsentiert, so dass an den Grenzen benachbarter Zonen eine Änderung der Phase einfallender Wellen um 2π oder Vielfache von 2π stattfindet und in einer Zone (36) die Phasenänderung im Bereich von 0 bis 2π oder 0 bis Vielfache von 2π liegt, wobei an verschiedenen Orten der diffraktiven Struktur diese Phasenänderungen verschiedenen Wellenlängen einfallenden Lichts entsprechen können.

6. Diffraktives Element nach einem der Ansprüche 1 bis 5, umfassend ein weiteres mikrostrukturelles Relief, das der ursprünglichen modulierten Struktur (10) überlagert ist.

7. Diffraktives Element nach Anspruch 6, wobei das genannte weitere mikrostrukturelle Relief derart angeordnet ist, dass seine diffraktiven Eigenschaften abhängig sind von der Richtung und den Koorientierungen der ursprünglichen modulierten Struktur (10).

8. Diffraktives Element nach Anspruch 6, wobei das genannte weitere mikrostrukturelle Relief lokal an Orten aufgebracht wird, um eine oder mehrere Regionen der ursprünglichen modulierten Struktur (10) zu unterscheiden.

9. Diffraktives Element nach Anspruch 6, 7 oder 8, umfassend eine Mikroreliefstruktur mit strukturellem Detail unter der Auflösungsfähigkeit des bloßen Auges.

10. Diffraktives Element nach Anspruch 9, wobei das Detail der zusätzlichen Mikroreliefstruktur eine veränderliche Dichte hat, um die Wahrnehmung von Transparenz vorzusehen.

11. Diffraktives Element nach Anspruch 9, wobei die zusätzliche Mikroreliefstruktur in einer anderen Ebene liegt als derjenigen der ursprünglichen modulierten Struktur (10) für die Auswahl der Richtung von diffraktivem Licht, um die Wahrnehmung von Transparenz vorzusehen.

12. Diffraktives Element nach einem der Ansprüche 6 bis 11, wobei das weitere mikrostrukturelle Relief dazu angeordnet ist, Oberflächentextur und/oder -beschaffenheit zu simulieren.

13. Diffraktives Element nach einem der Ansprüche 1 bis 12, **dadurch gekennzeichnet, dass** die diffraktive Struktur (10) in einem Material aufgezeichnet ist, dessen optische Eigenschaften, wie z. B. Transparenz, Reflexionsgrad, Brechungsindex, durch dieses Aufzeichnen moduliert werden oder die Aufzeichnung auf der Oberfläche des Materials ein Mikrorelief erzeugt, das, ähnlich wie die optischen Eigenschaften des Materials, folglich die Eigenschaften von einfallendem Licht verändert, wie z. B. Amplitude und/oder Phase der einfallenden Lichtwelle.

14. Diffraktives Element nach Anspruch 13, **dadurch gekennzeichnet, dass** es sich bei dem Aufzeichnungsmaterial um ein Material aus einer Gruppe von Materialien handelt: fotografische Emulsion, dichromatisierte Gelatine, Fotopolymer, fotothermoplastisches Material, Fotolack, Elektronenstrahllack, oder ein anderes geeignetes Material, das seine optischen Eigenschaften basierend auf Bestrahlung mit elektromagnetischer Strahlung, Elektronen oder Ionen, direkt, basierend auf möglicher anschließender chemischer oder anderer Behandlung ändert, Materialien wie Glas, Metall oder Kunststoff, die durch eine Reliefbearbeitung von Oberflächen zu behandeln sind.

15. Diffraktives Element nach einem der Ansprüche 1 bis 14, **dadurch gekennzeichnet, dass** es sich bei dem Material zum Aufzeichnen von Diffraktionszonen (5) um ein Material handelt, das im Wesentlichen eine Phasenmodulation von einfallendem Licht unter Verwendung symmetrischer (45) und/oder nicht symmetrischer (46) Entwicklung des Modulationsprofils ermöglicht.

16. Diffraktives Element nach einem der Ansprüche 1 bis 15, **dadurch gekennzeichnet, dass** es eine in Form eines Mikroreliefs aufgezeichnete diffraktive Struktur umfasst, die durch Prägen, UV-Gießen, Formen, Prägen in Metall, Kunststoff, Papier und andere Materialien, galvanisches Kopieren reproduziert werden kann.

17. Diffraktives Element nach einem der Ansprüche 1 bis 15, **dadurch gekennzeichnet, dass** es eine Aufzeichnung einer diffraktiven Struktur eines anderen Typs und/oder eine nicht diffraktive, z. B. grafische Struktur umfasst, die eine vom bloßen Auge beobachtbare optische Wahrnehmung bereitstellt und/oder ein verborgenes Element umfasst, das unter Verwendung verschiedener Hilfsmittel, z. B. Mikroskop, Laserstrahl oder spezielle Lesevorrichtungen, beobachtbar ist.

18. Diffraktives Element nach einem der Ansprüche 1 bis 17, **dadurch gekennzeichnet, dass**, um zwei oder mehr Bilder verschiedener Reliefmotive zu erzeugen, der Bereich des diffraktiven Elements zwei oder mehr Sätze flacher Mikrorelief- oder anderweitig modulierter Struktur (37, 38) umfasst, die nebeneinander positioniert sind, wobei die Sätze jeweils eine diffraktive Struktur (10) umfassen, die eine Aufzeichnung des jeweiligen Bilds trägt.

19. Diffraktives Element nach Anspruch 18, **dadurch gekennzeichnet, dass** die diffraktive Struktur (10) der einzelnen aufgezeichneten Bilder so angeordnet ist, dass Bilder unter gewissen Beobachtungsbedingungen nicht überlappen aber mit einer Änderung des Beobachtungswinkels oder der Neigung oder Drehung des diffraktiven Elements gegenseitig kippen.

20. Diffraktives Element nach einem der Ansprüche 1 bis 19, **dadurch gekennzeichnet, dass** die diffraktive Struktur so angeordnet ist, dass sie an einem gegebenen lokalen Punkt einfallendes Licht gleichzeitig in zwei oder mehr Sätze von Fortpflanzungsrichtungen (39) von abgelenktem Licht ablenkt, die für den Beobachter eine zwei oder mehr Reliefmotiven entsprechende optische Wahrnehmung und/oder eine andere optische Wahrnehmung erzeugen oder optional andere optische Informationen enthalten, um einen Bildwechsel vorzusehen.

21. Diffraktives Element nach einem der Ansprüche 1 bis 20, das zur Authentifikation oder Identifikation eines Trägerartikels als sein integraler Bestandteil auf dem Trägerartikel, wie z. B. einem Geldschein, einer Münze, einer Kreditkarte oder einer Identifikationskarte, einem Produkt, einem Identifikationsdokument oder einem anderen wertvollen Artikel gebildet wird oder der Trägerartikel zusätzlich mit dem diffraktiven Element ausgestattet ist.

22. Authentifikations-Sicherheitsvorrichtung mit einem diffraktiven Element nach einem der Ansprüche 1 bis 21.

23. Sicherheitsvorrichtung nach Anspruch 22 mit einer Hintergrundregion, die eine tiefe Gitterstruktur umfasst, die dazu angeordnet ist, Rückreflexion von Licht für einen dunkleren Hintergrund zu reduzieren und eine Verbesserung des Kontrasts vorzusehen.

24. Sicherheitsvorrichtung nach Anspruch 23, wobei die tiefe Gitterstruktur eine Hochrelief- oder feine Struktur oder eine gekreuzte Mottenaugen-Diffraktionsgitterstruktur umfasst.

25. Sicherheitsvorrichtung nach einem der Ansprüche 22-24 mit einer bemusterten demetallisierten Region, die dazu angeordnet ist, eine weiter optische Charakteristik vorzusehen.

26. Sicherheitsvorrichtung nach Anspruch 25, die um den Umriss des dreidimensionalen Bilds herum demetallisiert ist und eine weitere Schicht demetalliserter oder beschichteter Schicht umfasst, die eine andere Farbe hat als die obere genannte Metallisierung.

27. Sicherheitsvorrichtung nach Anspruch 26 mit einem dunkelfarbigen vakuumabgeschiedenen Metallreflektor, der als zusätzliche Beschichtung des Umrissbereichs dient.

28. Sicherheitsvorrichtung nach einem der Ansprüche 22-27 mit metallisierten Oberflächenreliefstrukturen in den das dreidimensionale Bild umgebenden Bereichen.

29. Sicherheitsvorrichtung nach einem der Ansprüche 22-28, wobei das dreidimensionale Bild dazu angeordnet ist, von einem Bereich umgeben zu sein, der Dünnfilm-Farbverschiebungseffekte zeigt.

30. Sicherheitsvorrichtung nach einem der Ansprüche 22-29, wobei das diffraktive Element mit einer darunterliegenden transparenten Reflektorschicht beschichten ist.

31. Sicherheitsvorrichtung nach Anspruch 30, wobei der transparente Reflektor eine Substanz mit hohem Brechungsindex umfasst.

32. Sicherheitsvorrichtung nach Anspruch 31 mit einer weiteren darunter liegenden dunkel beschichteten Schicht, die als dunkler Hintergrund für die Vorrichtung dient, wobei die dunkle Schicht durch Vakuum- oder Gravurbeschichtung/-druck oder Nassbeschichtung auf die Vorrichtung aufgetragen wurde.

33. Verfahren des Erzeugens eines dreidimensionalen Bilds, insbesondere des Imitierens eines echten oder imaginären Reliefmotivs, **dadurch gekennzeichnet, dass** eine flache Mikrorelief- oder anderweitig modulierte Struktur (10) eines diffraktiven Typs erzeugt wird, wobei die Struktur (10) Diffraktionszonen (5) umfasst, die so angeordnet sind, dass an Orten des Reliefmotivs (11) entsprechenden Orten der diffraktiven Struktur (10) die Diffraktionszonen (5) eine derartige Periodizität und Orientierung (a, b) haben, die die Ablenkung einfallenden Lichts (9) in der selben Richtung bewirken, in der das Reliefinotiv (11) ein einfallendes Licht ablenkt, so dass beim Beobachten der diffraktiven Struktur (10) unabhängig von den Beleuchtungsbedingungen eine sichtbare dreidimensionale und größtenteils achromatische Wahrnehmung des Bilds erreicht wird, das dem Reliefmotiv (11) entspricht.

34. Verfahren nach Anspruch 33, **dadurch gekennzeichnet, dass**, um eine größtenteils achromatische Wahrnehmung zu erhalten, ein beliebiger lokaler Bereich der diffraktiven Struktur (10), der vom Punkt seiner Funktion die Neigung des Reliefs am entsprechenden Ort des Reliefmotivs (11) repräsentiert, in mehrere Unterbereiche (29) aufgeteilt ist, die sich durch die Periodizität der Diffraktionszonen (5) unterscheiden, wobei die Periodizität der Diffraktionszonen (5) in den Unterbereichen (29) so eingestellt ist, dass für eine Wellenlänge die Ablenkung des auf den Unterbereich (29) einfallenden Lichts der Ablenkung von auf das Reliefmotiv (11) einfallendem Licht entspricht, so dass bei geeigneter Wahl von Wellenlängen, auf die die Struktur (10) einzustellen ist, ihr Mischen in der Beobachtungsrichtung stattfindet und das von der diffraktiven Struktur (10) abgelenkte Licht für den Beobachter (27) eine im Wesentlichen achromatische Wahrnehmung bereitstellt.

35. Verfahren nach Anspruch 33 oder 34, **dadurch gekennzeichnet, dass**, um eine größtenteils achromatische Wahrnehmung zu erhalten, ein Bereich (31, 32) der diffraktiven Struktur (30), der ein periodisches oder quasiperiodisches System von Diffraktionszonen (5) umfasst, erzeugt wird, so dass sich die Periodizität von Diffraktionszonen (5) fließend über den Bereich (31, 32) ändert und so Bedingungen für die Ablenkung von einfallendem Licht in die gewünschte Richtung über das ganze Farbspektrum oder dessen Teil erzeugt, die nach dem Mischen in der Beobachtungsrichtung eine größtenteils achromatische oder weiße Wahrnehmung für den Beobachter bereitstellen, wobei die fließende Änderung der Periodizität in der Senkrecht- oder Längsrichtung gegenüber dem System von Diffraktionszonen (5) stattfindet.

36. Verfahren nach Anspruch 33, 34 oder 35, **dadurch gekennzeichnet, dass**, um eine größtenteils achromatische Wahrnehmung zu erhalten, eine halbzufällige Verteilung von Periodizität der Diffraktianszonen (5) über dem Bereich der diffraktiven Struktur (10) ausgeführt wird, was Bedingungen für die Ablenkung von Licht in die gewünschte Richtung für eine derartige Repräsentation von Wellenlängen sicherstellt, dass sie in der Beobachtungsrichtung und nach dem Mischen eine im Wesentlichen achromatische oder weiße Wahrnehmung für den Beobachter bereitstellen.

37. Verfahren nach einem der Ansprüche 33 bis 36, umfassend das Bereitstellen eines weiteren mikrostrukturellen Reliefs, das der ursprünglichen modulierten Struktur (10) überlagert ist.

38. Verfahren nach Anspruch 37, wobei das genannte weitere mikrostrukturelle Relief derart angeordnet ist, dass seine diffraktiven Eigenschaften abhängig sind von der Richtung und den Koorientierungen der ursprünglichen modulierten Struktur (10).

39. Verfahren nach Anspruch 37, umfassend das Bereitstellen eines weiteren mikrostrukturellen Reliefs lokal an Orten, um eine oder mehrere Regionen der ursprünglichen modulierten Struktur (10) zu unterscheiden.

40. Verfahren nach Anspruch 37, 38 oder 39, umfassend das Bereitstellen einer Mikroreliefstruktur, die strukturelles Detail unter der Auflösungsfähigkeit des bloßen Auges hinzufügt.

41. Verfahren nach Anspruch 40, wobei das Detail der zusätzlichen Mikroreliefstruktur dazu angeordnet ist, eine veränderliche Dichte zu haben, um die Wahrnehmung von Transparenz vorzusehen.

42. Verfahren nach Anspruch 40, wobei die zusätzliche Mikroreliefstruktur in einer anderen Ebene liegt als derjenigen der ursprünglichen modulierten Struktur (10) für die Auswahl der Richtung von diffraktivem Licht, um die Wahrnehmung von Transparenz vorzusehen.

43. Verfahren nach einem der Ansprüche 33 bis 42, umfassend die Schritte des Erzeugens der diffraktiven Zonen (36) aus einem durch seine Phasenfunktion beschriebenen Reliefmotiv (35), die eine Änderung der Phase einfallender Wellen repräsentiert, so dass an den Grenzen benachbarter Zonen eine Phasenänderung der sofortigen Welle um 10π oder Vielfache von 2π stattfindet und in einer Zone (36) die Phasenänderung im Bereich von 0 bis 2π oder *0,[sic* bis einem Vielfachen von 2π liegt, wobei an verschiedenen Orten der diffraktiven Struktur derartige Phasenänderungen verschiedenen Wellenlängen einfallenden Lichts entsprechen können.

44. Verfahren nach einem der Ansprüche 33 bis 43, **dadurch gekennzeichnet, dass** die diffraktive Struktur (10) in Material aufgezeichnet wird, dessen optische Eigenschaften, wie z. B. Transparenz, Reflexionsgrad, Brechungsindex, durch dieses Aufzeichnen moduliert werden oder die Aufzeichnung auf der Oberfläche des Materials ein Mikrorelief erzeugt, das, ähnlich, wie die optischen Eigenschaften des Materials, folglich die Eigenschaften von einfallendem Licht verändert, wie Amplitude und/oder Phase der einfallenden Lichtwelle.

45. Verfahren nach Anspruch 44, **dadurch gekennzeichnet, dass** es sich bei dem Aufzeichnungsmaterial um ein Material aus einer Gruppe von Materialien handelt: fotografische Emulsion, dichromatisierte Gelatine, Fotopolymer, fotothermoplastisches Material, Fotolack, Elektronenstrahllack, oder ein anderes Material, das seine optischen Eigenschaften basierend auf Bestrahlung mit elektromagnetischer Strahlung, Elektronen oder Ionen, direkt, basierend auf möglicher anschließender chemischer oder anderer Behandlung ändert, Materialien wie Glas, Metall oder Kunststoff, die durch eine Reliefbearbeitung von Oberflächen zu behandeln sind.

46. Verfahren nach einem der Ansprüche 33 bis 45, **dadurch gekennzeichnet, dass** zum Aufzeichnen von Diffraktionszonen (5) ein Material verwendet wird, das im Wesentlichen Phasenmodulation von einfallendem Licht ermöglicht, wobei nicht symmetrische und/oder symmetrische Entwicklung des Modulationsprofils verwendet wird.

47. Verfahren nach einem der Ansprüche 33 bis 46, **dadurch gekennzeichnet, dass** die diffraktive Struktur (10) als Teil eines diffraktiven Elements erzeugt wird, das weiter eine Aufzeichnung einer diffraktiven Struktur eines anderen Typs und/oder eine nicht diffraktive, z. B. grafische Struktur umfasst, die eine vom bloßen Auge beobachtbare optische Wahrnehmung bereitstellt und/oder ein verborgenes Element umfasst, das unter Verwendung verschiedener Hilfsmittel, z. B. Mikroskop, Laserstrahl oder spezielle Lesevorrichtungen beobachtbar ist.

48. Verfahren nach einem der Ansprüche 33 bis 47, **dadurch gekennzeichnet, dass** zum Erzeugen von zwei oder mehr Bildern verschiedener Reliefmotive zwei oder mehr Sätze flacher Mikrorelief- oder anderweitig modulierter Strukturen (37, 38) im Oberflächenbereich des diffraktiven Elements positioniert werden, wobei die Sätze (37, 38) jeweils eine Aufzeichnung des jeweiligen Bilds umfassen.

49. Verfahren nach Anspruch 48, **dadurch gekennzeichnet, dass** die diffraktive Struktur (10) der einzelnen, auf diese Weise aufgezeichneten Bilder so vorgeschlagen ist, dass Bilder unter gewissen Beobachtungsbedingungen nicht überlappen aber mit einer Änderung des Beobachtungswinkels oder der Neigung oder Drehung des diffraktiven Elements gegenseitig kippen.

50. Verfahren nach einem der Ansprüche 33 bis 49, **dadurch gekennzeichnet, dass** die diffraktive Struktur so erzeugt wird, dass sie an einem gegebenen lokalen Punkt einfallendes Licht in zwei oder mehr Sätze von Fortpflanzungsrichtungen (39) von dekliniertem Licht dekliniert, die für einen Beobachter eine zwei oder mehr Reliefmotiven entsprechende optische Wahrnehmung und/oder eine andere optische Wahrnehmung erzeugen oder optional andere optische Informationen enthalten.

51. Verfahren nach einem der Ansprüche 33 bis 50, **dadurch gekennzeichnet, dass** die diffraktive Struktur (10) als Komponente eines diffraktiven Elements erzeugt wird, bei dem es sich um ein diffraktives Sicherheitselement handelt, das zur Authentifikation oder Identifikation eines Trägerartikels bestimmt wird, wie z. B. einem Geldschein, einer Münze, einer Kreditkarte oder Identifikationskarte, einem Produkt, einem Identifikationsdokument oder einem anderen wertvollen Artikel, wobei es sich bei dem diffraktiven Sicherheitselement um einen integralen Bestandteil des Trägerartikels handelt oder der Trägerartikel zusätzlich mit dem diffraktiven Sicherheitselement ausgestattet ist.

52. Verfahren des Erzeugens eines diffraktiven Elements, **dadurch gekennzeichnet, dass** Diffraktionszonen (5) einer flachen Mikrorelief- oder anderweitig modulierten Struktur (10) eines diffraktiven Elements so angeordnet werden, dass an Orten des Reliefmotivs (11) entsprechenden Orten der diffraktiven Struktur (10) die diffraktiven Zonen (5) eine derartige Periodizität und Orientierung (a, b) haben, die die Ablenkung einfallenden Lichts (9) in der selben Richtung bewirken, in der das Reliefmotiv (11) ein einfallendes Licht ablenkt, um beim Beobachten der diffraktiven Struktur (10) unabhängig von den Beleuchtungsbedingungen eine sichtbare, dreidimensionale und größtenteils achromatische Wahrnehmung des Bilds zu erreichen, das dem Reliefmotiv (11) entspricht.

53. Verfahren des Erzeugens eines diffraktiven Elements nach Anspruch 52, umfassend den Schritt des Bereitstellens eines weiteren mikrostrukturellen Reliefs, das der ursprünglichen modulierten Struktur (10) überlagert ist.

54. Verfahren nach Anspruch 53, wobei das weitere mikrostrukturelle Relief derart angeordnet ist, dass diese diffraktiven Eigenschaften abhängig sind von der Richtung und den Koorientierungen der ursprünglichen modulierten Struktur (10).

55. Verfahren nach Anspruch 53, umfassend den Schritt des Bereitstellens des weiteren mikrostrukturellen Reliefs lokal an Orten, um eine oder mehrere Regionen der ursprünglichen modulierten Struktur (10) zu unterscheiden.

56. Verfahren nach Anspruch 53, 54, oder 55, wobei die Mikroreliefstruktur mit strukturellem Detail unter der Auflösungsfähigkeit des bloßen Auges bereitgestellt wird.

57. Verfahren nach Anspruch 56, umfassend den Schritt des Veränderns der Dichte des Details der zusätzlichen Mikroreliefstruktur, um die Wahrnehmung von Transparenz vorzusehen.

58. Verfahren nach Anspruch 56, umfassend das getrennte Positionieren der zusätzlichen Mikroreliefstruktur in einer anderen Ebene als derjenigen der ursprünglichen modulierten Struktur (10) für die Auswahl der Richtung von diffraktivem Licht, um die Wahrnehmung von Transparenz vorzusehen.

59. Verfahren nach einem der Ansprüche 52 bis 58, wobei das genannte weitere mikrostrukturelle Relief dazu angeordnet ist, Oberflächentextur und/oder -beschaffenheit zu simulieren.

60. Verfahren nach einem der Ansprüche 52 bis 59, **dadurch gekennzeichnet**, das die diffraktive Struktur in einem Substrat (Trägermaterial) des diffraktiven Elements mittels Verfahren aufgezeichnet wird, die das vorgeschlagene System diffraktiver Zonen des diffraktiven Elements, einschließlich eines Modulationsprofils, in einen Oberflächenbereich schreiben können.

61. Verfahren nach Anspruch 60, **dadurch gekennzeichnet, dass** für die Aufzeichnung ein Schreiber mit einem Laser-, Elektronen- oder Ionenstrahl verwendet wird, wobei die Aufzeichnung entweder latent ist, d.h. die diffraktive Struktur selbst entsteht durch weitere Behandlung des Aufzeichnungsmaterials - zum Beispiel durch Entwickeln, Ätzen, Fixieren oder sie ist endgültig, d.h. es findet keine andere Behandlung statt oder sie ist kombiniert.

62. Verfahren nach Anspruch 60, **dadurch gekennzeichnet, dass** die diffraktive Struktur durch Lithographie und/oder Ätzen oder Abscheiden erzeugt wird oder durch Bearbeiten des Substrats des diffraktiven Elements, z. B. durch Gravieren, Verdampfen.

63. Verfahren nach einem der Ansprüche 52 bis 62, **dadurch gekennzeichnet, dass** die diffraktive Mikroreliefstruktur reproduziert wird durch Kopieren mittels Prägen, UV-Gießen, Formen, Prägen in Metall, Kunststoff, Papier und andere Materialien, galvanisches Kopieren.

64. Verfahren nach einem der Ansprüche 52 bis 63, **dadurch gekennzeichnet, dass** das diffraktive Element, insbesondere zur Authentifikation oder Identifikation eines Trägerartikels, als sein integraler Bestandteil auf dem Trägerartikel, wie z. B. einem Geldschein, einer Münze, einer Kreditkarte oder einer Identifikationskarte, einem Produkt, einem Identifikationsdokument oder einem anderen wertvollen Artikel gebildet wird oder der Trägerartikel zusätzlich mit dem diffraktiven Element ausgestattet wird, z. B. unter Verwendung des Verfahrens des Heißprägens, als selbstklebendes Etikett.

## Revendications

1. Elément diffracteur, comprenant une structure plate de microrelief ou autrement modulée (10) d'un type diffracteur agencé pour imiter une scène de relief, comprenant des zones de diffraction (5) agencées de telle sorte qu'à des emplacements de la structure diffractrice (10) correspondant à des emplacements correspondants dans la scène de relief (11) les zones de diffraction aient une périodicité et une orientation (a, b) telles que la lumière incidente (9) soit déviée dans le même sens que celui dans lequel la scène de relief (11) la dévierait, pour produire une sensation d'image tridimensionnelle et largement achromatique visible correspondant à la scène de relief (11).

2. Elément diffracteur selon la revendication 1, **caractérisé en ce qu'**une zone locale de la structure diffractrice (10) agencée pour représenter une pente du relief à l'endroit correspondant de la scène de relief (11) est divisée en sous-zones (29) qui diffèrent en périodicité de zones de diffraction (5), la périodicité des zones de diffraction (5) dans les sous-zones étant telle qu'à une longueur d'onde la déviation de la lumière frappant la sous-zone (29) correspond à une déviation de la lumière frappant la scène de relief (11), de telle sorte que par sélection des longueurs d'onde auxquelles la structure (10) doit être réglée le mélange de la lumière de ces longueurs d'onde en lumière sensiblement blanche se produise dans le sens de l'observation.

3. Elément diffracteur selon la revendication 1 ou 2, **caractérisé en ce qu'**une zone (31, 32) de la structure diffractrice (30) comprenant un système périodique ou quasi périodique de zones de diffraction (5) est agencée de telle sorte que la périodicité des zones de diffraction (5) change couramment dans la zone (31, 32) et crée ainsi des conditions de déviation de la lumière incidente dans un sens souhaité dans la totalité ou une partie des spectres chromatiques, ce qui, après mixage, dans le sens observé, produit une sensation largement achromatique ou blanche pour l'observateur, le changement courant de la périodicité se produisant perpendiculairement ou longitudinalement relativement au système de zones de diffraction (5).

4. Elément diffracteur selon l'une quelconque des revendications 1 à 3, **caractérisé en ce qu'**une zone de la structure diffractrice (10) a une périodicité distribuée semi-aléatoire de zones de diffraction (5) pour garantir des conditions de déviation de la lumière dans le sens souhaité pour une représentation de longueurs d'onde telle que, dans le sens observé et après mixage une sensation sensiblement achromatique ou blanche est produite pour l'observateur.

5. Elément diffracteur selon l'une quelconque des revendications 1 à 4, **caractérisé en ce que** des zones diffractrices (36) sont créées à partir d'une scène de relief (35) décrite par sa fonction de phase qui représente un changement de phase d'une onde incidente de telle sorte qu'aux frontières de zones adjacentes un changement de phase d'une onde incidente par 2π ou des multiples de 2π se produise et dans une zone (36) le changement de phase s'étende de 0 à 2π ou de 0 à un multiple de 2π, dans lequel à différents endroits de la structure diffractrice, de tels changements de phase peuvent correspondre à différentes longueurs d'onde de lumière incidente.

6. Elément diffracteur selon l'une quelconque des revendications 1 à 5, et comportant un autre relief microstructurel superposé à la structure modulée d'origine (10).

7. Elément diffracteur selon la revendication 6, dans lequel ledit autre relief micro-structurel est agencé de telle sorte que ses propriétés diffractrices dépendent du sens et des co-orientations de la structure modulée d'origine (10).

8. Elément diffracteur selon la revendication 6, dans lequel ledit autre relief micro-structurel est appliqué localement à certains emplacements de façon à différencier une ou plusieurs régions de la structure modulée d'origine (10).

9. Elément diffracteur selon la revendication 6, 7 ou 8, et comportant une structure de micro-relief ayant un détail structurel en dessous du pouvoir de résolution de l'oeil nu.

10. Elément diffracteur selon la revendication 9, dans lequel le détail de la structure de micro-relief supplémentaire varie en densité de façon à permettre la perception de transparence.

11. Elément diffracteur selon la revendication 9, dans lequel la structure de micro-relief supplémentaire est située dans un plan différent de celui de la structure modulée d'origine (10) pour la sélection du sens de la lumière diffractrices de façon à permettre la perception de transparence.

12. Elément diffracteur selon l'une quelconque des revendications 6 à 11, dans lequel l'autre relief micro-structurel est agencé pour simuler une texture et/ou une finition de surface.

13. Elément diffracteur selon l'une quelconque des revendications 1 à 12, **caractérisé en ce que** la structure diffractrice (10) est enregistrée dans un matériau dont les propriétés optiques telles que transparence, facteur de réflexion, indice de réfraction, sont modulées par cet enregistrement ou l'enregistrement crée sur la surface du matériau un microrelief qui, de la même façon que les propriétés optiques du matériau, change alors les propriétés de la lumière incidente telles que p. ex. l'amplitude et/ou la phase de l'onde de lumière incidente.

14. Elément diffracteur selon la revendication 13, **caractérisé en ce que** le matériau d'enregistrement est un matériau provenant d'un groupe de matériaux : émulsion photographique, gélatine dichromatée, photopolymère, matériau photothermoplastique, photorésist, résist composé par faisceau électronique, ou autre matériau convenable qui change ses propriétés optiques selon l'exposition à un rayonnement électromagnétique, des électrons ou des ions, directement, en fonction d'un traitement chimique ou autre subséquent possible, un matériau tel que le verre, un métal ou un plastique devant être traité par un travail en relief des surfaces.

15. Elément diffracteur selon l'une quelconque des revendications 1 à 14, **caractérisé en ce que** le matériau d'enregistrement de zones de diffraction (5) est un matériau permettant sensiblement un type de phase de modulation de la lumière incidente par développement symétrique (45) et/ou non symétrique (46) du profil de modulation.

16. Elément diffracteur selon l'une quelconque des revendications 1 à 15, **caractérisé en ce qu'**il comprend une structure diffractrice enregistrée sous forme de microrelief reproductible par estampage, coulée aux UV, moulage, estampage dans des matériaux de métal, plastique, papier et autres, copie par galvanoplastie.

17. Elément diffracteur selon l'une quelconque des revendications 1 à 15, **caractérisé en ce qu'**il comprend un enregistrement d'une structure diffractrice d'un type différent et/ou une structure non diffractrices, p. ex. graphique, qui produit une sensation optique observable à l'oeil nu et/ou comprend un élément caché observable en utilisant divers aides, p. ex. microscope, faisceau laser ou dispositifs spéciaux de lecture.

18. Elément diffracteur selon l'une quelconque des revendications 1 à 17, **caractérisé en ce que** pour créer deux ou plusieurs images de diverses scènes de relief la zone de l'élément diffracteur comprend deux ou plusieurs ensembles de structure de microrelief plat ou autrement modulée (37, 38) positionnés les uns à côté des autres, chacun des ensembles comprenant une structure diffractrice (10) portant un enregistrement d'image respectif.

19. Elément diffracteur selon la revendication 18, **caractérisé en ce que** la structure diffractrices (10) des images enregistrées individuelles est agencée de telle sorte que les images ne se chevauchent pas dans certaines conditions d'observation mais s'inclinent mutuellement lors d'un changement de l'angle d'observation ou d'une inclinaison ou rotation de l'élément diffracteur.

20. Elément diffracteur selon l'une quelconque des revendications 1 à 19, **caractérisé en ce que** la structure diffractrice est agencée de telle sorte qu'à un point local donné, elle dévie la lumière incidente simultanément dans deux ou plusieurs ensembles de sens (39) de propagation de lumière déviée, lesquels créent pour l'observateur une sensation visuelle correspondant à deux ou plusieurs scènes de relief et/ou autre sensation visuelle ou comportent facultativement d'autres informations optiques de façon à permettre une permutation d'image.

21. Elément diffracteur selon l'une quelconque des revendications 1 à 20, formé sur un élément de support tel que p. ex. un billet, une pièce, une carte de crédit ou une carte d'identité, un produit, un document d'identification ou autre élément précieux, comme partie intégrante de celui-ci ou l'élément de support est doté de plus de l'élément diffracteur, pour l'authentification ou l'identification de l'élément de support.

22. Dispositif de sécurité d'authentification comportant un élément diffracteur selon l'une quelconque des revendications 1 à 21.

23. Dispositif de sécurité selon la revendication 22 et comportant une région de fond comprenant une structure de diffraction profonde agencée pour réduire la rétroréflexion de la lumière pour un fond plus sombre et permettre un rehaussement du contraste.

24. Dispositif de sécurité selon la revendication 23, dans lequel la structure de diffraction profonde comprend un relief élevé ou une structure fine ou une structure de réseau de diffraction "Moth-Eye".

25. Dispositif de sécurité selon l'une quelconque des revendications 22 à 24, et comportant une région démétallisée à motif agencée pour produire une autre caractéristique visuelle.

26. Dispositif de sécurité selon la revendication 25, lequel est démétallisé autour du contour de l'image tridimensionnelle et comporte une autre couche démétallisée ou couche de revêtement d'une couleur différente de celle de ladite métallisation supérieure.

27. Dispositif de sécurité selon la revendication 26, et comportant un réflecteur métallique déposé sous vide de couleur sombre servant de revêtement de zone de contour supplémentaire.

28. Dispositif de sécurité selon l'une quelconque des revendications 22 à 27, et comportant des structures métallisées de relief de surface dans les zones entourant l'image tridimensionnelle.

29. Dispositif de sécurité selon l'une quelconque des revendications 22 à 28, dans lequel l'image tridimensionnelle est agencée pour être entourée par une zone présentant des effets de distorsion chromatique en couches minces.

30. Dispositif de sécurité selon l'une quelconque des revendications 22 à 29, dans lequel l'élément diffracteur est revêtu d'une couche à réflecteur transparent sous-jacent.

31. Dispositif de sécurité selon la revendication 30, dans lequel le réflecteur transparent comprend une substance d'un indice de réfraction élevé.

32. Dispositif de sécurité selon la revendication 31, et comportant une autre couche de revêtement sombre sous-jacente servant de fond sombre au dispositif, la couche sombre ayant été revêtue/imprimée sous vide ou par gravure ou revêtue de façon liquide sur le dispositif.

33. Procédé de création d'une image tridimensionnelle, imitant spécialement une scène de relief réelle ou imaginaire, **caractérisé en ce qu'**une structure de microrelief plate ou autrement modulée (10) d'un type diffracteur est créée, la structure (10) comprenant des zones de diffraction (5) qui sont agencées de telle sorte qu'à des endroits de la structure diffractrice (10) correspondant à des endroits dans la scène de relief (11) les zones de diffraction (5) aient une périodicité et une orientation (a, b) telles que la lumière incidente (9) soit déviée dans le même sens que celui dans lequel la scène de relief (11) dévie une lumière incidente, produisant ainsi une sensation d'image tridimensionnelle et largement achromatique visible correspondant à la scène de relief (11) lorsque l'on observe la structure diffractrice (10) quelles que soient les conditions d'éclairage.

34. Procédé selon la revendication 33, **caractérisé en ce que** pour obtenir une sensation largement achromatique, toute zone locale de la structure diffractrice (10) qui représente depuis le point de sa fonction la pente du relief à l'endroit correspondant de la scène de relief (11) est divisée en plusieurs sous-zones (29) qui diffèrent en périodicité de zones de diffraction (5), la périodicité des zones de diffraction (5) dans les sous-zones (29) étant réglée telle qu'à une longueur d'onde la déviation de la lumière frappant la sous-zone (29) correspond à une déviation de la lumière frappant la scène de relief (11), de telle sorte qu'en choisissant convenablement les longueurs d'onde auxquelles la structure (10) doit être réglée leur mélange dans le sens de l'observation se produise et la lumière déviée par la structure diffractrice (10) produise pour l'observateur (27) une sensation sensiblement achromatique.

35. Procédé selon la revendication 33 ou 34, **caractérisé en ce que** pour obtenir une sensation largement achromatique une zone (31, 32) de la structure diffractrice (30) comprenant un système périodique ou quasi périodique de zones de diffraction (5) est créée de telle sorte que la périodicité des zones de diffraction (5) change couramment dans la zone (31, 32) et crée ainsi des conditions de déviation de la lumière incidente dans un sens souhaité dans la totalité ou une partie du spectre de couleurs, ce qui, après mixage, dans le sens observé produit une sensation largement achromatique ou blanche pour l'observateur, le changement courant de la périodicité se produisant perpendiculairement ou longitudinalement relativement au système de zones de diffraction (5).

36. Procédé selon la revendication 33, 34 ou 35, **caractérisé en ce que** pour obtenir une sensation largement achromatique une distribution semi-aléatoire de la périodicité des zones de diffraction (5) est assurée dans toute la zone de la structure diffractrice (10), ce qui garantit des conditions de déviation de la lumière dans le sens souhaité pour une représentation des longueurs d'onde telle que, dans le sens observé et après mixage une sensation sensiblement achromatique ou blanche est produite pour l'observateur.

37. Procédé selon l'une quelconque des revendications 33 à 36, et comportant la fourniture d'un autre relief micro-structurel superposé à la structure modulée d'origine (10).

38. Procédé selon la revendication 37, dans lequel ledit autre relief micro-structurel est agencé de telle sorte que ses propriétés diffractrices dépendent du sens et des co-orientations de la structure modulée d'origine (10).

39. Procédé selon la revendication 37, et fournissant un autre relief microstructurel localement à certains emplacements de façon à différencier une ou plusieurs régions de la structure modulée d'origine (10).

40. Procédé selon la revendication 37, 38 ou 39, et comportant la fourniture d'une structure de micro-relief ajoutant un détail structurel en dessous du pouvoir de résolution de l'oeil nu.

41. Procédé selon la revendication 40, dans lequel le détail de la structure de micro-relief supplémentaire est agencé pour varier en densité de façon à permettre la perception de transparence.

42. Procédé selon la revendication 40, dans lequel la structure de micro-relief supplémentaire est située dans un plan différent de celui de la structure modulée d'origine (10) pour la sélection du sens de la lumière diffractrice de façon à permettre la perception de transparence.

43. Procédé selon l'une quelconque des revendications 33 à 42, et comportant les étapes de création des zones diffractrices (36) à partir d'une scène de relief (35) décrite par sa fonction de phase qui représente un changement de phase d'ondes incidentes de telle sorte qu'aux frontières de zones adjacentes un changement de phase d'une onde instantanée par 10π ou des multiples de 2π se produise et dans une zone (36) des changements de phase s'étendent de 0 à 2n ou de 0,[*sic*] à un multiple de 2π, dans lequel à différents endroits de la structure diffractrice, de tels changements de phase puissent correspondre à différentes longueurs d'onde de lumière incidente.

44. Procédé selon l'une quelconque des revendications 33 à 43, **caractérisé en ce que** la structure diffractrice (10) est enregistrée dans un matériau dont les propriétés optiques telles que transparence, facteur de réflexion, indice de réfraction, sont modulées par cet enregistrement ou l'enregistrement crée sur la surface du matériau un microrelief qui, de la même façon que les propriétés optiques du matériau, change alors les propriétés de la lumière incidente telle que par exemple l'amplitude et/ou la phase de l'onde de lumière incidente.

45. Procédé selon la revendication 44, **caractérisé en ce que** le matériau d'enregistrement est un matériau provenant d'un groupe de matériaux : émulsion photographique, gélatine dichromatée, photopolymère, matériau photothermoplastique, photorésist, résist composé par faisceau électronique, ou autre matériau qui change ses propriétés optiques selon l'exposition à un rayonnement électromagnétique, des électrons ou des ions, directement, en fonction d'un traitement chimique ou autre subséquent possible, un matériau tel que le verre, un métal ou un plastique devant être traité par un travail en relief des surfaces.

46. Procédé selon l'une quelconque des revendications 33 à 45, **caractérisé en ce que** pour l'enregistrement des zones de diffraction (5) un matériau permettant sensiblement un type de phase de modulation de la lumière incidente est utilisé, un développement non symétrique et/ou symétrique du profil de modulation étant utilisé.

47. Procédé selon l'une quelconque des revendications 33 à 46, **caractérisé en ce que** la structure diffractrice (10) est créée comme partie d'un élément diffracteur qui comprend en outre un enregistrement d'une structure diffractrice d'un type différent et/ou d'une structure non diffractrice, p. ex. graphique qui produit une sensation optique observable à l'oeil nu et/ou comprend un élément caché observable en utilisant divers aides, p. ex. microscope, faisceau laser ou dispositifs spéciaux de lecture.

48. Procédé selon l'une quelconque des revendications 33 à 47, **caractérisé en ce que** pour créer deux ou plusieurs images de diverses scènes de relief deux ou plusieurs ensembles de structures de microrelief plat ou autrement modulées (37, 38) sont dans la zone de surface de l'élément diffracteur, chacun des ensembles (37, 38) comprenant un enregistrement d'image respectif.

49. Procédé selon la revendication 48, **caractérisé en ce que** la structure diffractrice (10) des images individuelles enregistrées de cette façon est proposée de telle sorte que les images ne se chevauchent pas dans certaines conditions d'observation mais s'inclinent mutuellement lors d'un changement de l'angle d'observation ou une inclinaison ou rotation de l'élément diffracteur.

50. Procédé selon l'une quelconque des revendications 33 à 49, **caractérisé en ce que** la structure diffractrice est créée de telle sorte qu'à un point local donné, elle décline la lumière incidente en deux ou plusieurs ensembles de sens (39) de propagation de lumière déclinée, lesquels créent pour l'observateur une sensation visuelle correspondant à deux ou plusieurs scènes de relief et/ou autre sensation visuelle ou comportent facultativement d'autres informations optiques.

51. Procédé selon l'une quelconque des revendications 33 à 50, **caractérisé en ce que** la structure diffractrice (10) est créée comme composant d'un élément diffracteur qui est un élément diffracteur de sécurité déterminé pour une authentification ou identification d'un élément de support tel que p. ex. un billet, une pièce, une carte de crédit ou une carte d'identité, un produit, un document d'identification ou autre élément précieux, l'élément diffracteur de sécurité faisant partie intégrante de l'élément de support ou l'élément support étant doté de plus de l'élément diffracteur de sécurité.

52. Procédé de création d'un élément diffracteur, **caractérisé en ce que** des zones de diffraction (5) d'une structure plate de microrelief ou autrement modulée (10) d'un élément diffracteur sont agencées de telle sorte qu'à des endroits de la structure diffractrice (10) correspondant à des endroits dans la scène de relief (11) les zones de diffraction (5) aient une périodicité et une orientation (a, b) telles que la lumière incidente (9) soit déviée dans le même sens que celui dans lequel la scène de relief (11) dévie une lumière incidente, pour produire une sensation d'image tridimensionnelle et largement achromatique visible correspondant à la scène de relief (11), lors de l'observation de la structure diffractrice (10) quelles que soient les conditions d'éclairage.

53. Procédé de création d'un élément diffracteur selon la revendication 52 et comportant l'étape de fourniture d'un autre relief micro-structurel superposé à la structure modulée d'origine (10).

54. Procédé selon la revendication 53, dans lequel l'autre relief micro-structurel est agencé de telle sorte que ces propriétés diffractrices dépendent du sens et des co-orientations de la structure modulée d'origine (10).

55. Procédé selon la revendication 53, et comportant l'étape de fourniture de l'autre relief microstructurel localement à certains emplacements de façon à différencier un ou plusieurs régions de la structure modulée d'origine (10).

56. Procédé selon la revendication 53, 54 ou 55, dans lequel la structure de micro-relief est dotée d'un détail structurel en dessous du pouvoir de résolution de l'oeil nu.

57. Procédé selon la revendication 56, et comportant l'étape de variation du détail de la structure de micro-relief supplémentaire en densité de façon à permettre la perception de transparence.

58. Procédé selon la revendication 56, et comportant le placement séparé de la structure de micro-relief supplémentaire dans un plan différent de celui de la structure modulée d'origine pour la sélection du sens de la lumière diffractrice de façon à permettre la perception de transparence.

59. Procédé selon l'une quelconque des revendications 52 à 58, dans lequel ledit autre relief micro-structurel est agencé pour simuler une texture et/ou finition de surface.

60. Procédé selon l'une quelconque des revendications 52 à 59, **caractérisé en ce que** la structure diffractrice est enregistrée dans un (matériau porteur de) substrat de l'élément diffracteur au moyen de technologies qui peuvent écrire le système proposé de zones de diffraction de l'élément diffracteur y compris un profil de modulation dans une zone de surface.

61. Procédé selon la revendication 60, **caractérisé en ce que** pour l'enregistrement un système d'écriture à laser, faisceau électronique ou faisceau ionique est utilisé, l'enregistrement étant soit latent, c.-à-d. que la structure diffractrices elle-même provient d'un autre traitement du matériau d'enregistrement - par exemple par développement, gravure, fixation, soit définitif c.-à-d. qu'aucun autre traitement n'a lieu, ou est un enregistrement combiné.

62. Procédé selon la revendication 60, **caractérisé en ce que** la structure diffractrice est produite par lithographie et/ou gravure ou dépôt, ou en travaillant le substrat de l'élément diffractif p. ex. par gravure, évaporation.

63. Procédé selon l'une quelconque des revendications 52 à 62, **caractérisé en ce que** la structure diffractrice à micro-relief est reproduite par copie par estampage, coulée par UV, moulage, estampage dans des matériaux de métal, plastique, papier et d'autres matériaux, copie par galvanoplastie.

64. Procédé selon l'une quelconque des revendications 52 à 63, **caractérisé en ce que** l'élément diffracteur est créé sur un élément de support tel que p. ex. un billet, une pièce, une carte de crédit ou une carte d'identité, un produit, un document d'identification ou autre élément précieux, comme partie intégrante ou l'élément de support est doté de plus de l'élément diffracteur, p. ex. par procédé d'estampage à chaud, comme étiquette autocollante, spécialement pour l'authentification ou l'identification de l'élément de support.
